(19) Europäisches Patentamt
European Patent Office
Office européen des brevets

(11) **EP 1 762 053 B1**

(12) **EUROPEAN PATENT SPECIFICATION**

(45) Date of publication and mention
of the grant of the patent:
**11.08.2010 Bulletin 2010/32**

(21) Application number: **04740483.5**

(22) Date of filing: **30.06.2004**

(51) Int Cl.:
***H04L 12/56*** (2006.01)

(86) International application number:
**PCT/EP2004/007104**

(87) International publication number:
**WO 2006/002665 (12.01.2006 Gazette 2006/02)**

(54) **Method and system for network topology updating using topology perturbation**

Verfahren und Ssystem zur Netzwerktopologie-Aktualisierung unter Verwendung einer Topologie-Perturbation

Procédé et système pour la mise à jour de la topologie de réseau utilisant la perturbation en topologie

(84) Designated Contracting States:
**AT BE BG CH CY CZ DE DK EE ES FI FR GB GR HU IE IT LI LU MC NL PL PT RO SE SI SK TR**

(43) Date of publication of application:
**14.03.2007 Bulletin 2007/11**

(73) Proprietor: **Telecom Italia S.p.A.**
**20123 Milano (IT)**

(72) Inventors:
• **DE GIOVANNI, Luigi,**
**Politecnico Di Torino**
**I-10129 Torino (IT)**
• **DELLA CROCE, Frederico,**
**Politecnico Di Torino**
**I-10129 Torino (IT)**
• **QUAGLIOTTI, Marco,**
**Telecom Italia S.p.A.**
**I-10148 Torino (IT)**

• **TADEI, Roberto,**
**Politecnico Di Torino**
**I-10129 Torino (IT)**

(74) Representative: **Battipede, Francesco et al**
**Telecom Italia S.p.A.**
**Piazza L. Einaudi, 8**
**20124 MIlano (IT)**

(56) References cited:
**US-A1- 2002 012 348**

• **A. NUCCI, B. SANSO, T.G. CRANIC, E. LEONARDI, M. AJMONE MARSAN: "Design of Fault-Tolerant Logical Topologies in Wavelength.Routed Optical IP Networks" IEEE GLOBECOMM 2001, [Online] 25 November 2001 (2001-11-25), pages 1-6, XP002319234 SAN ANTONIO, TEXAS, USA Retrieved from the Internet: URL:http: //www.sprintlabs.com/People/anucc i/Papers/ Globecom01-2.pdf> [retrieved on 2005-02-25]**

**Description**

<u>Field the invention</u>

The invention relates to communication network planning and design. Typical expected users of the invention are operators and service providers having to configure (e.g. plan) and/or re-configure (possibly in real-time conditions) their networks (IP networks) in a cost effective manner, while guaranteeing to the customers a given level of performance, even in the presence of network element failures.

<u>Description of the related art</u>

A number of patent documents such as e.g. EP-A-1 005 193, EP-A-1 005 194, (and the corresponding US-B-6 240 463) and EP-A-1 005 195 concern integrated systems for planning IP networks with performance guarantees.

The planning arrangements disclosed in these prior art documents essentially include the following functional blocks (i.e. processors): a routing processor, two link capacity design processors (worst case and optimistic case), a network topology optimisation processor and a router replacement processor.

The functional blocks are used one at a time and following a process flow in determining the network design. The three documents in question are specifically targeted at link capacity computation, router replacement and topology optimization, respectively.

The article by Bley, M. Grötschel, and R. Wessäly: "Design of Broadband Virtual Private Networks: Model and Heuristics for the B-WiN", Technical Report SC 98-13, Konrad-Zuse-Zentrum für Informationstechnik, Berlin, 1998 considers single node or link failure. In case of failure, a percentage of the offered traffic is restored on the survived network. The administrative weight matrix is an output of the method and is determined in such a way that only one shortest path results in the network topology. The optimization technique is a local search with some alternative types of neighbourhood.

The article by Chamberland S. and B. Sansò: "Overall Design of Reliable IP Networks with Performance Guarantees", Le Cahiers du GERAD G-2000-30, 2000 considers an extended problem including the location of a given node as well as the dimensioning of the links. The network is arranged over two levels: a first level comprised of rings and a second level structured as a meshed network and working with a shortest path protocol for routing the traffic. In case of failure, only the declared percentage of the protected traffic is restored. The procedure adopted is essentially a "tabu" search and is strongly influenced by the structure of the first level of the network.

The article by Holmberg K. and D. Yuan: "Optimization of internet protocol network design and routing", Proceedings of Nordic MPS '01, Copenhagen, Denmark, 2001, assumes an IP network working with a Shortest Path (SP) algorithm for routing packets, including a flow splitting feature on the equivalent routes. The weight matrix is an output of the method. The solution is based on simulated annealing

Specifically, the article by Bley et, al. assumes that the arc weights are to be determined (optimized) by the algorithm and not assigned as input data. This is not compatible in many practical cases where the arc weights are assigned by the network administrator (human or automatic system) and not calculated or optimized by an algorithm. In addition, the method of Bley and al. determines the arc weights in such a way that the shortest path between any source and destination pairs is unique. That always avoids the case of flow splitting among multiple paths.

However, in many real networks as the weight is assigned by the network administrator and the network topology is often quite regular. The possibility of multiple shortest paths between couples of node occurs with a high probability, and the method of Bley et al. is not applicable in many practical network scenarios.

The article by Holmberg et al. and EP-A-1 005 195 similarly fail to consider any "resilience" requirements (namely the survivability of the network against node or link failures) in solving the topology planning problem. Additionally, the article by Chamberland et al. makes a very specific and rather stringent hypothesis on the topological structure (two levels with rings in the lower and mesh in the higher). Such assumptions evidently restrict the field of application of the arrangement disclosed to the very specific conditions considered.

The article by A. Nucci, B. Sanso, T.G. Cranic, E. Leonardi, M. Ajmone Marsan: "Design of Fault Tolerant Locigal Topologies in Wavelength Routed Optical IP Networks", IEEE Globecomm 2001, 25 November 2001 - 29 November 2001, pages 1-5, discloses a methodology for the design of fault-tolerant logical topologies in wavelength routed optical networks, wherein the resilience properties of the topology is considered during the logical topology optimization process, including protection and restoration.

<u>Object and summary of the invention</u>

The need therefore exists of overcoming the intrinsic drawbacks of the prior art arrangements considered in the foregoing. Specifically, the need is felt for arrangements adapted to operate on a given network configuration having a given network topology based on arcs having associated administrative routing weights that are fixed and cannot be changed. Additionally, the need exists of properly taking into account so-called resilience requirements, by providing truly effective responses to at least two critical aspects of network configuration:

- the possibility of taking into account the differentiated level of survivability of the traffic demands, and
- the possibility of making network design robust in presence of failures of one or more network elements.

The object of the invention is thus to provide a fully satisfactory response to those needs.

The invention is carried out by the method of claim 1 and the system of claim 18.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/modular fashion.

An example of the arrangement described herein is thus a method for configuring a communication network including the steps of:

- identifying a given network configuration having a given network topology based on arcs having associated administrative routing weights and including a number of given shortest paths,
- generating at least one neighbouring configuration by producing in the network topology a perturbation leaving said administrative routing weights unaffected and wherein the majority of the shortest paths in the neighbouring configuration are comprised of shortest paths from said number left unaffected by said perturbation and combinations of shortest paths from said number,
- evaluating the neighbouring configuration against the given configuration based on a given cost function, whereby said evaluation involves only the portion of said network topology affected by said perturbation, and
- substituting the neighbouring configuration for the given configuration if said neighbouring configuration is found to represent an improvement over the given configuration based on said cost function.

That arrangement in question allows robust network design by relying on an optimization technique that makes it possible to perform a robust topological design able to cover single router and/or link failures.

A particularly example of the arrangement described herein provides topology planning of an IP network by relying on a shortest path configuration for routing packets. In the presence of equivalent multiple shortest paths, the routing strategy is assumed to split the traffic flows over equivalent routes. This example finds a minimum cost network topology taking into account the need of capacity for an effective network resilience strategy. As used herein, resilience is intended as the ability to restore - partly or wholly - on the surviving network the traffic injured by the failure of a network element (node or link).

The arrangement described herein is fully capable of meeting with resilience requirements, such as e.g. the presence of multiple equivalent shortest paths and/or the possibility of allotting the traffic, flows to two different classes: non protected traffic or restored traffic.

In addition, the arrangement described herein can be used together with methods for network link dimensioning under performance guarantees (see for instance EP-A-1 005 193). This gives rise to a two step design procedure wherein a first step optimizes the topology with the object, of reducing network costs while a second step sizes accurately the links in order to ensure compliance with the requirements in terms of quality of service (QoS) such as e.g. packet delays.

A preferred embodiment of the arrangement described herein employs a "tabu" search, that is a well-known heuristic, general-purpose optimization approach.

One of the significant points of the tabu search arrangements described herein lies in the neighbor evaluation procedure and, specifically, in the network loading criterion under the multiple paths splitting rule on equivalent shortest paths of traffic flows and in managing maximum hop constraints. Splitting rule among multiple shortest path concerns the operations applied by .the nodes (routers) to forward packets to the next hop node towards the destination address. That is done according to the Open Shortest Path First - Equal Cost Multy Path (OSPF-ECM) protocol (see for instance B. Fortz, M. Thorup "Internet Traffic Engineering by optimizing OSPF weights", Proceedings of IEEE INFOCOM '00, 2000 for an explanation and a model for the routing protocol OSPF-ECM). By means of the routing protocol messages each node/router knows the topology of the network in terms of nodes, arcs and weights of each arc. Every a given period of time (that can be chosen from minutes to hours) each node process the latest updated routing messages and determines the shortest paths towards any given known destinations. Any flow directed to a given destination is equally split on the arcs that belong to a one of the shortest paths.

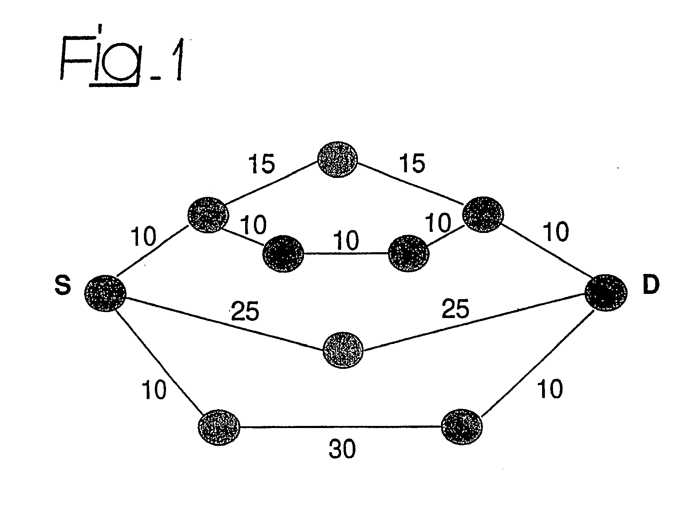

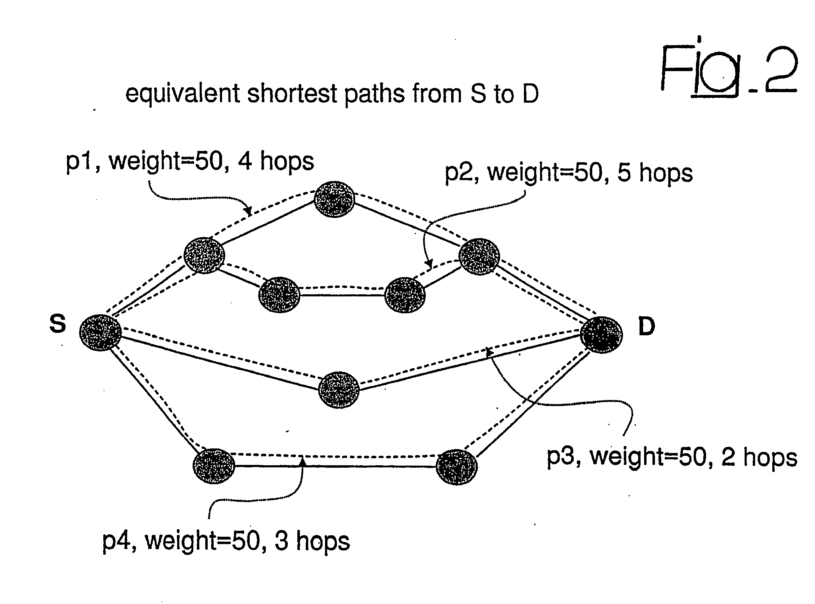

For an explanation of that concept reference may be made to Figure 1 annexed herewith. In Figure 1, the correspondent administrative weight to be used for determining the shortest paths is indicated near each arc in the topology. Figure 2 shows the four equivalent shortest paths, namely p1, p2, p3 and p4, existing between the nodes *S* and *D*. The four paths are equivalent from the point of view of the weights but have different hop lengths.

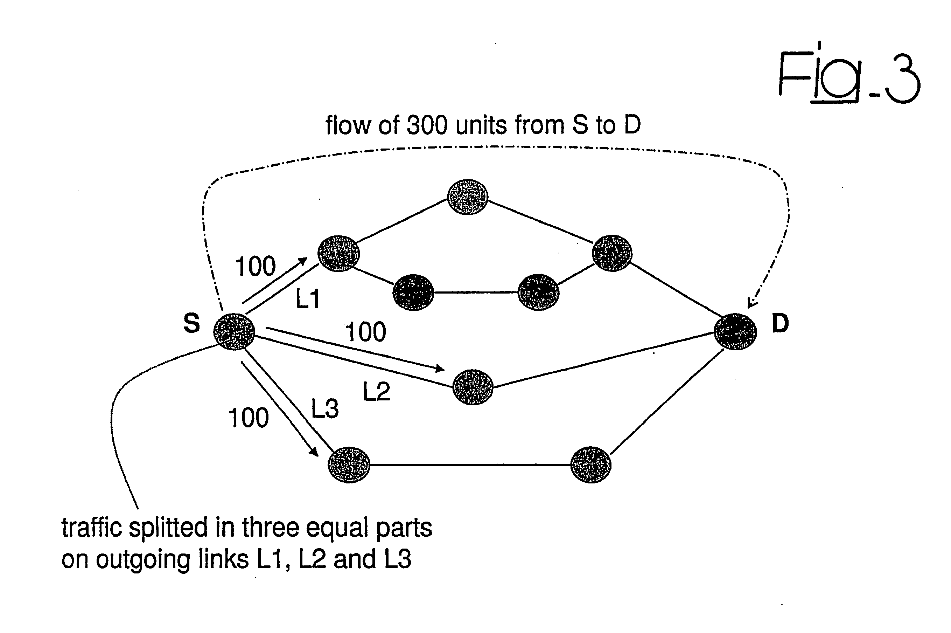

In Figure 3, L1, L2 and L3 are three outgoing links of the source node S. The paths p1 and p2 pass through the link L1, p3 passes through the link L2 and p4 passes through the link L3. According with OSPF-ECM principle the flow towards the destination node D, that is 300 units in the example of Figure 2, is divided into three equal parts (and not four, as the number of the paths), each one forwarded on the outgoing links L1, L2 and L3.

While each node evaluates the equivalent shortest paths (based on the weights) the maximum number of hops representing a routing constraint means that each node considers the paths that have - at most - the maximum number of hops assigned. For instance, if the network of Figure 1 is considered by assuming that the maximum number of hops allowed is 3, only path p3 (3 hops) and path p4 (2 hops) can be considered as shortest paths towards destination D while p1 (4 hops) and p2 (5 hops) must be excluded.

These points are related to the high number of shortest paths one has to deal with in real size instances. Preferably, two complementary approaches are used in order to overcome these issues in connection with IP resilient topology planning, namely:

- incremental neighbourhood evaluation, and
- reduced dimension neighbourhoods.

A basic idea leading to an incremental neighbourhood evaluation is that generating a neighbour solution introduces a small perturbation in the topology of the current solution. As a consequence, the majority of the shortest paths are not affected by such perturbation: by detecting in an efficient manner the set of unaffected shortest paths, the computational requirements related to their definition can be reduced, which leads to appreciable time savings.

The use of neighbourhoods having reduced dimensions further improves the results in terms of computational time reduction. This derives from reducing the number of solution evaluations for each neighbourhood, while trying to preserve the effectiveness thereof.

A number of different approaches can be applied to efficiently set up a neighbourhood: 1) add and remove, 2) add and remove and full exchange, 3) add, remove and linear exchange and 4) add, remove and pivot-node exchange.

The last two options appreciably reduce the neighbourhood dimensions and, hence, make the proposed arrangement computationally efficient.

Brief description of the annexed drawings

The invention will now be described, by way of example only, with reference to the enclosed figures of drawing, wherein:

- figures 1 to 3 have been already described in the foregoing,
- figure 4 is a schematic representation of a mesh optimization procedure in the arrangement described herein,
- figure 5 is another flow chart representative of configuration analysis and dimensioning steps as performed in the arrangement described herein,
- figure 6 is a schematic representation of an assigned initial configuration in the arrangement described herein,
- figure 7 is a diagram exemplary of a possible fully connected initial configuration creation in the arrangement described herein,
- figure 8 is a diagram exemplary of an alternative initial configuration creation in the arrangement described herein,
- figures 9 and 10 are flow charts exemplary of search optimization and diversification within the framework of the arrangement described herein, and
- figures 11, 12, and 13 are exemplary flow-charts of the implementation of routing procedures in the arrangement described herein.

Detailed description of preferred embodiments of the invention

In the context of communication network planning - the aim of a topology optimization procedure is to properly select the topology of the network, i.e. the active arcs (or the node adjacencies) in the network graph.

In the arrangement described herein, the topology is selected with the object of minimizing the total cost of the network while ensuring at the same time the restoration of the traffic flows to be protected in presence of failures (i.e. by providing a "resilience" feature).

The cost of network is evaluated as the sum of the costs of the links interconnecting the transit nodes. The type of link (and its base capacity) is assigned and may be different (in terms of capacity) for different network arcs. On each topology arc one or more links can be installed, depending on the amount of traffic loading the corresponding arc.

In the following, traffic will be assumed to be classified in two main categories, namely:

- traffic designated R (Restored), which is carried in the nominal condition and re-routed in case of network failure, if necessary, and
- traffic designated U (Unprotected), which is carried in the nominal condition but can be lost in case of a failure (node or link out of order) along its nominal path.

The protection category (R or U) is assigned for each traffic flow to be carried.

Topology optimization is performed taking into account a predefined set of failures of network elements (nodes or links). This means that the network is able to carry the whole traffic (R and U) in the nominal condition while, in the presence of any failure condition, the network is able to carry the whole restored traffic (with the exception of the traffic generated and terminated at the failed node) but not the whole unprotected traffic.

Specifically, in the presence of a failure, the traffic classified as U and in transit over the failed element can be lost.

The problem of mesh optimization under failure condition can be formulated as an optimization problem.

The notations used here in the optimization problem are the following.

$T=[t(i,j)]$ is the symmetrical input matrix of the topological graph.

If $t(i,j) = 0$, the arc between node $i$ and node $j$ is excluded a priori, if $t(i,j)=2$ the arc necessarily takes part in the final topology while for $t(i,j)=1$ the decision as to whether including or not including the arc between nodes $i$ and $j$ is referred to the optimization algorithm. The input matrix of the topological graph determines the set of working variables for the optimization procedure.

$P=[p(i,j)]$ is the link capacity reference symmetrical matrix for dimensioning the arc between node $i$ and node $j$. For instance $p(i,j)=26.8E6$ means that between $i$ and $j$ it is possible to use one to 26.8E6 bit/s links in parallel. In case of multiple links, the load is equally shared there between. Links are supposed to be bi-directional links, i.e. a single link has the full capacity on both directions, from $i$ to $j$ and from $j$ to $i$.

$N = \{n_i\}$ is the set of nodes.

$\Phi = \{\phi_s\}$ is the set of network scenario to be considered in network optimization. This always includes at least the nominal case $\phi_0 = \{0, 0\}$ (all the network elements are working and available) and a number of single or multiple node or arc fails, to be specified by the user.

For instance, failure of the node $i$ is represented by $\phi_n =\{i, i\}$ while failure of the arc between $i$ and $j$ is represented by $\phi_t =\{i, j\}$.

$R =[r(i, j)]$ is a matrix of weights used in routing the flows over the graph. If $t(i, j)=0$ then $r(i, j)$ is not relevant.

$C = [c(i, j)]$ is the link cost array. $c(i, j)$ is the cost of a single link of payload, (capacity) specified in $p(i, j)$ between node $i$ and $j$. Given a network optimization scenario the element $c(i, j)$ is relevant if $t(i,j) \Rightarrow 1$.

$B=[\overline{b}(h)]$ is the list of traffic demands. Each demand is a traffic requirement of bandwidth $b$ in bit/s from node $i$ to node $j$ with a constraint concerning the maximum number $k$ of hops in routing the demand and type of protection $l$.

Each traffic demand is thus represented by a vector of five parameters: $\overline{b}(h) =[b, i, j, k, l]$.

As indicated, two classes of traffic protection are handled in the arrangement described herein: restored (R) and unprotected (U) traffic. Preferably the class of service is not handled by the mesh optimization procedure while it could be used by the dimensioning procedure.

$U=[u(i, j)]$ is the symmetrical output matrix of the topology graph.

If $t(i, j) = 0$ then $u(i, j) = 0$, if $t(i, j) = 2$ then $u(i, j) =1$. If $t(i, j) =1$ then $u(i, j)=0$ or 1, depending on the decision as to whether including or not including the arc between nodes i and $j$ taken by the optimization algorithm.

$Z=[z(i, j)]$ is the symmetrical output link matrix. $z(i, j)$ is the number of link of type $p(i, j)$ between nodes $i$ and $j$. The link matrix is the result of the routing of the traffic flows and the sizing the network arcs according to the most demanding scenario (the worst condition). If $u(i, j)=0$ then $z(i, j)=0$ while if $u(i, j)=1$ normally $z(i, j) \geq 1$ but in some particular cases when there isn't any traffic to be carried by the arc between nodes $i$ and $j$ it follows that $z(i, j) = 0$.

The last condition is true for instance when $t(i, j) = 2$, but the routing protocol does not find any equivalent shortest path for the whole set of demands and among all the scenarios that include $(i,j)$ as part of the path.

$\Lambda_h^{\phi} = \{\lambda_h^{\phi}(l)\}$ is the set of equivalent shortest paths of demand $h$ in the scenario $\phi$. This can be determined by resorting to any procedure adapted for finding the equivalent shortest paths on a weighted graph. (see, e.g. Section 1 of the article by Holmberg, et al. cited in the introductory part of the description)

$X = \{x_{(i,j)}^{h,\phi,\lambda}\}$ is the entire set of routing variables. $x_{(i,j)}^{h,\phi,\lambda} = 1$ if demand $\overline{b}(h)$ use for its equivalent

path $\lambda$ the arc from $i$ to $j$, for the network scenario $\phi$. Otherwise $x_{(i,j)}^{h,\phi,\lambda} = 0$. $X$ follows directly from topology matrix.

The transformation function $X = \Psi(U, R, \Phi, B)$ is the function that determines the set of routing variables.

$Y = \left\{ y_{(h)}^{\phi,\lambda} \right\}$ is the set of amounts of traffic of demand h routed on the equivalent path $\lambda$ in the network failure scenario $\phi$. $Y$ depends on the routing variables $X$ and on the characteristics of each single demand (bandwidth and protection requirements).

A transformation function $Y=\Gamma(X,\Phi,B)$ finds the fraction of each traffic demand routed on its equivalent paths for the whole set of network scenarios.

According to the following notations (and by taking into account the characteristic of the problem) a network configuration is defined without ambiguity by the topology matrix $U$ when all the other network data is assigned. In other words, the set $\{U, R, C, P, \Phi, B\}$ determines - through the transformation functions $\Psi$ and $\Gamma$ - the variables $X, Y$ and as a consequence $Z$ and the cost of the configuration.

The mesh optimization problem can thus be formulated as follows.

Minimize the network cost:

$$\sum_i \sum_j \left[ c(i,j)\, z(i,j) \right] \qquad \text{(Eq. 1)}$$

subject to:

$$\max_{\phi \in \Phi} \left\{ \sum_h \sum_{\lambda \in \Lambda_h^\phi} y_h^{\phi,\lambda} x_{(i,j)}^{h,\phi,\lambda} \right\} \leq z(i,j)\, p(i,j) \qquad \text{(Eq. 2)}$$

$$X = \Psi(U, R, \Phi, B) \qquad \text{(Eq. 3)}$$

$$Y = \Gamma(X, \Phi, B) \qquad \text{(Eq. 4)}$$

$$u(i,j) = 0 \quad \text{for} \quad t(i,j) = 0 \qquad \text{(Eq. 5)}$$

$$u(i,j) = 1 \quad \text{for} \quad t(i,j) = 2 \qquad \text{(Eq. 6)}$$

$$z(i,j) = 0 \quad \text{for} \quad u(i,j) = 0 \qquad \text{(Eq. 7)}$$

The optimization variables are $u(i, j)$, which represent the topology. In fact, as explained above, U implies, together with other input data, the routing variables $X\ Y$ and the capacity $Z$ as a direct consequence.

The mesh optimization problem formulated above is per se a rather complex problem. It is possible to demonstrate that it is a reduction of the general problem known as the *Steiner Tree* problem. This belongs to the class of most difficult optimization problems, being a NP-hard problem. For details on Steiner tree problem and its complexity evaluation see M. R. Garey and D. S. Johnson. Computer and Intractability. A Guide to NP-Completeness. W. H. Freeman, 1979.

As an exact solution is not practically reachable for real network dimensions, a heuristic approach is developed.

Practical and preferred embodiments of these optimization methods are a local search or a tabu search performed by starting from a given network configuration and evolving by means of small variations (so-called "neighbours") and transitions towards configurations that exhibit lower costs.

Such an approach is characterized by the following main concepts.

First, a starting network configuration is created on the basis of one of the proposed options.

Then a local search (with or without a tabu list, depending on the strategy selected) is performed by means of "small variations" (i.e. moves) of the current configuration in order to find new configurations with lower costs and move towards them.

The local search terminates when no further progress can be achieved depending on a selected termination criterion.

A number of diversification steps are performed. Each diversification step consists of a new local search starting from a configuration obtained through heavy rearrangements of the current (or, alternatively, the best known) configuration.

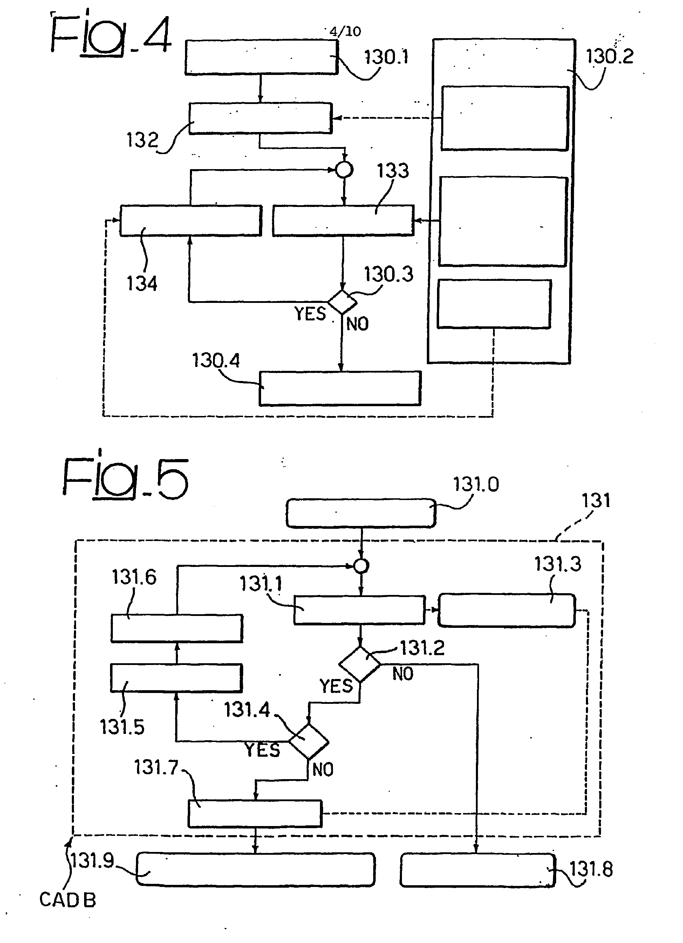

Figure 4 depicts such an optimization procedure, intended to obtain from an initial configuration 132 (that is a - first - physical configuration of a communication network) a final configuration 130.4 (that is a - second - physical configuration of the communication network in question).

In the diagram of figure 4, input data 130.1 include e.g. the set $N=\{n_i\}$, the matrices $T, P, R, C$ set $\Phi=\{\phi_s\}$, and the list of demands B=$[\bar{b}(h)]$.

The optimization parameters 130.2 may include e.g. three types of parameters:

- i) initial condition criteria, which means the strategy used for building a feasible starting configuration,
- ii) search parameters, that specify some options for the search algorithm, and
- iii) diversification criterion.

The initial configuration 132 involves the use of procedures of a known type to set up a feasible starting configuration or, alternatively, to acquire an assigned one.

The core block of the arrangement is the search module 133. This can be a simple local search or a tabu search module as better explained in the following.

A diversification module 134 is run until the number of diversification steps specified by the user is reached. A decision block 130.3 disciplines such iterations by checking whether any new diversification is to be carried out.

The diversification module 134 determines a network configuration that is as far as possible from the best (or last) configuration reached by the previous run of the local search procedure. The next local search may thus be started from a configuration that is as different as possible from the configuration reached in the last local search.

At the end of the procedure a final configuration is reached: this is a configuration that constitutes a local minimum. Another solution can be found by varying one or more optimization parameters and running the procedure again.

Before further detailing the characteristics and operation of the other functional blocks of Figure 4, a description is provided of the Configuration Analysis and Dimensioning Block (CADB) whose structure is shown in Figure 5.

In the current context, the block in question takes the set of input data $\{R, C, P, \Phi\}$ (regarded as known and invariable) in order to evaluate the configuration identified by the topology matrix U and the demand B.

The purpose of the block is primarily to determine whether a given network configuration is admitted or not.

If the configuration is admitted, the block provides the sizing and the costing of the configuration. The configuration is admitted if all the flows can be routed on the network topology U in all the failure scenarios specified in $\Phi=\{\phi_s\}$ and taking into account the resilience requirement of the traffic flows.

The block CADB of Figure 5 operates as follows.

Starting from a configuration $U_k$ the traffic flows is routed on the nominal topology by the Flow Routing Engine (FRE) 131.1. The engine 131.1 finds the equivalent shortest paths for each traffic demand and stores as temporary variables the amounts of traffic to be carried by each arc according to the OSPF-ECM protocol rules.

Inputs for the engine 131.1 are $\{U, R, B\}$.

If the engine 131.1 is unable to route all the demands (as managed by a decision maker module 131.2) the configuration is not admitted. This occurs when the nominal topology does not ensure the necessary connectivity and the block CADB ends with a signal indicating the non-admissibility of the configuration $U_k$ (this output is designated 131.8).

Otherwise a loop managed by a decision maker 131.4 is created with the aim of examining all the failure scenarios specified in the set $\Phi=\{\phi_s\}$.

As a first step of such loop, a blocks 131.5 simulates the failure of the corresponding network element (node or arc) associated to network scenario $\phi_s$ by changing the nominal topology matrix, which is $U_k = U_k^0$, and obtaining a modified matrix $U_k^s$.

Then, the traffic demand B = [$\bar{b}(h)$] is modified (i.e. reduced) by removing all the demands whose shortest paths (one or more) calculated in the nominal condition include in their paths the network element failed. This processing is performed by module 131.6.

Then the new input {$U$, $R$, B} is submitted to the engine 131.1 and the result could be either the admissibility or the non-admissibility of the scenario subject to the simulated failure.

The loop is continued until its completion. If all the failure configurations are admitted, the starting network configuration $U_k$ satisfy the connectivity constraint for the nominal and for the failure cases and a block 131.7 evaluates the size and the cost of the configuration (designated 131.9 in Figure 5). Otherwise the block CADB outputs a signal indicative of the non-admissibility of the configuration (designated 131.8).

The initial configuration block 132 in Figure 4 will now be described in greater detail.

Different strategies are suitable for creating a starting configuration for the heuristic optimization.

The basic strategies are: 1) direct assignment, 2) fully connected, 3) "greedy", 4) random.

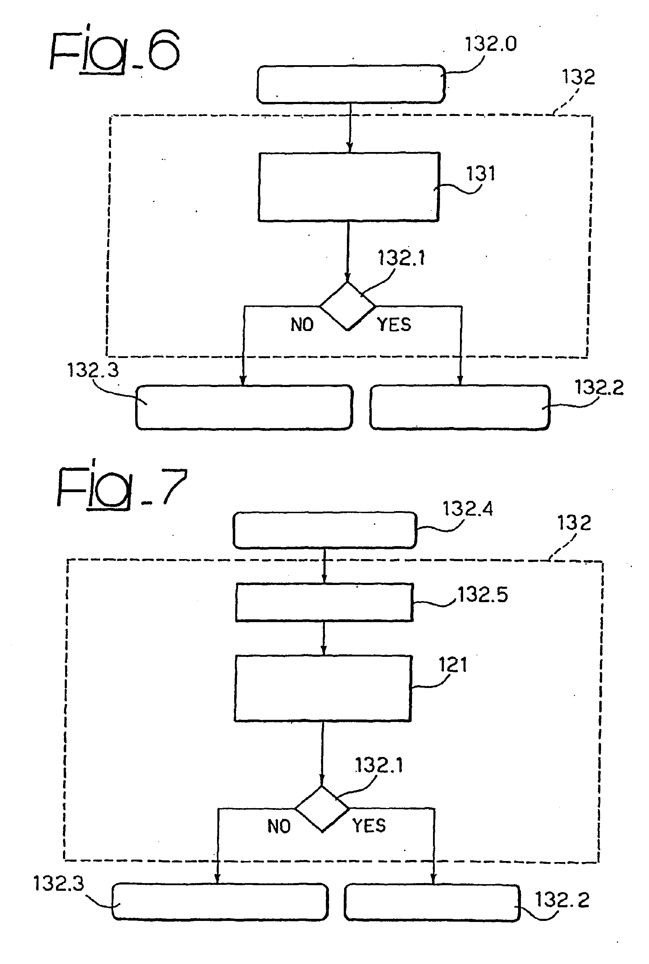

Figure 6 shows how the block 132 operate in the case of direct assignment. The user specifies a configuration $U_0$ 132.0 and the configuration is analyzed by the block CADB. If the topology is admitted, (the related check is designated 132.1) the result is a configuration $U_0$ dimensioned and assumed as the starting configuration of the optimization procedure 132.2. Otherwise the procedure is stopped 132.3.

Figure 7 shows how the block 132 operates in the case of a fully connected starting configuration. The input topological matrix $T$ 132.4 is taken as a reference for the creation of the fully connected topology $U_{start}$. A block 132.5 creates a arc for those elements of the matrix $T$ that are equal to 1 (arc that can take part of the final topology) or 2 (arc forced to exist). The block 121 evaluates the configuration and (in a step 132.1) decides if the procedure can go on (132.2 - configuration admitted) or has to be stopped (132.3 - configuration non-admissible).

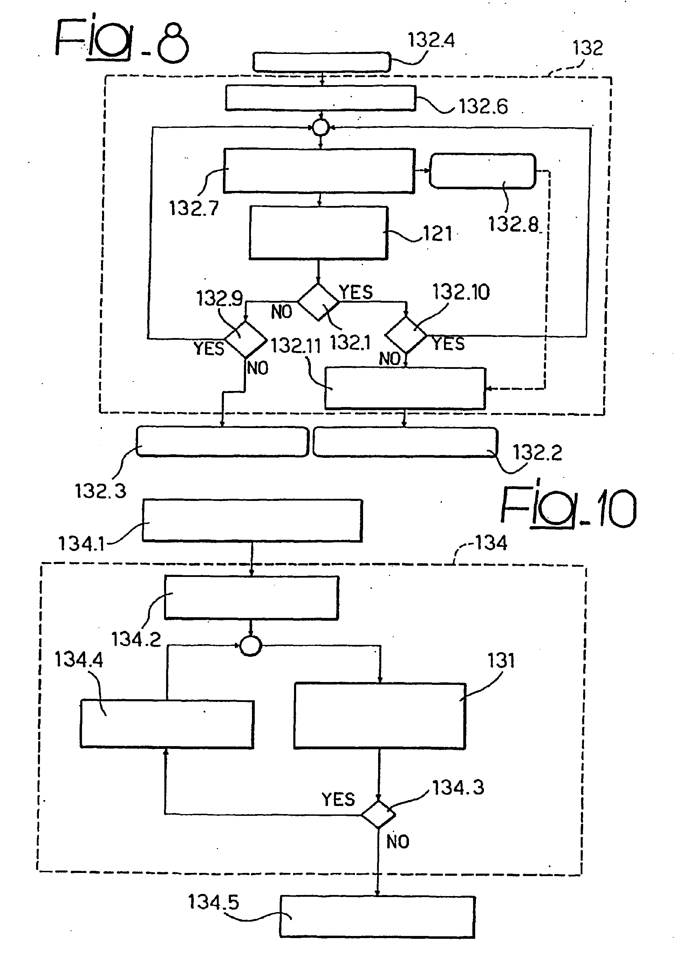

Figure 8 concerns random or "greedy" topology creation. The procedure is the same for both options and changes only for the criterion adopted to add the new arc at each cycle. An input topological matrix $T$ 132.4 is used for opening all the arcs in the starting topology for those elements of matrix $T$ that are equal to 2 (132.6 - arc forced to exist). Then a cycle starts and arcs are added to the topology one at a time up to the first admissible configuration reached. A block 132.7 adds one arc to the topology based on the criterion selected. If the selected criterion is "random" a arc is randomly selected among those arcs not included in the current topology while if the selected criterion is "greedy", the selected arc is the one showing the minimum cost of transmission capacity (the parameter to compare the arcs is $c_{ij}/p_{ij}$, expressed in $ per bit/s).

At each step the configuration is analyzed in the block 121.

If the configuration is not admitted the procedure follows the left side of the branch out of the block 132.1 and, if there is at least one more arc to be added, one further arc is added by 132.7 and the procedure continues. Otherwise as the constraints imposed by the input topological matrix $T$ do not allow a feasible topological configuration, the procedure ends.

If configuration is admitted the procedure follow the right side branch out of the block 132.1 and the resulting cost of the current solution (i. e. configuration $k$) is compared in a step 132.10 with the cost of the previous one (*i. e.* configuration *k-1* whose cost is stored in block 132.8).

If the latest solution costs less than the earlier one and at last one arc can be added to the topology, the procedure tries to add one further arc in a step 132.7 and the procedure continues. Otherwise, the procedure exits to the arc adding cycle and evolves to a step 132.11.

In the step 132.11, the configuration $U_k$ is retained as the initial configuration $U_{start}$ if the current configuration is the minimum cost configuration. Otherwise, the configuration $U_{k-1}$ stored in block 132.8 is restored as the initial configuration $U_{start}$ in the optimization procedure.

If at the end of the initial configuration setting the solution is found to be feasible the configuration is evaluated and sized in a step 132.2.

Otherwise, the configuration is not admitted and the procedure ends step (step 132.3).

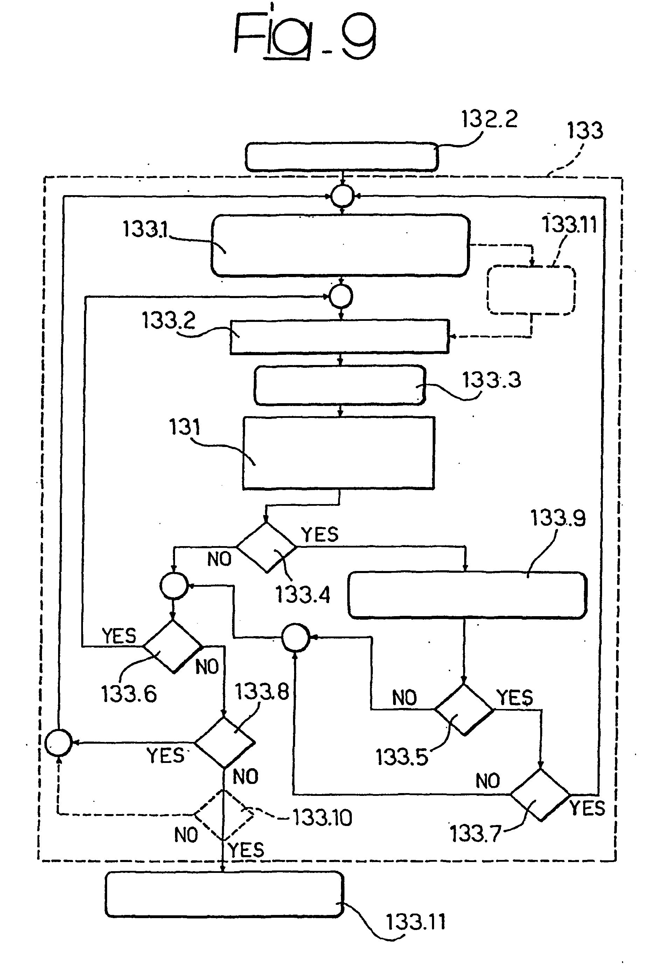

Figure 9 is a flow chart of the optimization block designated 133 in the diagram of Figure 4.

The algorithm of Figure 9 can operate according to different options.

These options concern the search strategy (local search or tabu search), descent strategy (two options: steepest descent or first improvement), and neighbourhood creation rules (four options as explained in the following).

The procedure depicted in Figure 9 applies to both local search and tabu search.

Local search evaluates the neighbourhood of the current configuration and updates the current configuration by replacing it with the minimum cost neighbour (or the first minimum cost neighbour found in case of first improvement). The process stops when a given configuration has not any lower cost neighbour.

Tabu search is a more sophisticated and effective technique. At each step the current configuration neighbourhood is evaluated and the minimum cost neighbour is selected as the next configuration, even if its cost is higher than the cost of the current configuration. In addition, a tabu list is created and updated to keep memory the K last moves (i.e. the variations effected are memorized). A termination criterion decides when the procedure has to be stopped.

The flow chart of Figure 9 takes as an input any of the start configurations $U_{start}$ provided as one of the four available options for the creation of the initial configuration described in the foregoing.

The procedure begins the optimization cycle by selecting $U_{start}$ as the current configuration $U_k$.

A block 133.1 sets the starting configuration as the current one and, in case of tabu search optimization strategy, initializes the tabu list, by forcing it to be empty. The same block 133.1 updates also the best solution $U_{best}$ reached during the optimization and, in case of tabu search, updates the tabu list by inserting the move leading to the current solution. Initially $U_{best}$ is set to $U_{start}$.

In case of local search, $U_{best}$ decreases at every optimization cycle while in case of a tabu search the last configuration found $U_k$ can cost more that the current best configuration.

The current configuration is taken as a basis for a number of configurations that are very close to the current in terms of topology structure. Such configurations are called the neighbours of the current configuration and the whole set of neighbours is known as the neighbourhood". Neighbours are evaluated in order to try to move heuristically towards lower cost configurations in order to effectively reach a local minimum.

After the current configuration is set, the neighbouring search begins. The neighbour $m$ of $U_k$ (indicated by 133.3) is generated by a block 133.2 and evaluated by the CADB 131 (i.e. the CADB block of Figure 5)..

The feasibility of the neighbour under evaluation is tested by a decision block 133.4. If the neighbour is unfeasible, a decision block 133.6 verifies if any other neighbours have to be generated and evaluated. If the answer is NO, a decision block 133.8 tests if there is almost one explored neighbour of $U_k$ with a cost lower than $U_k$.

If the answer to the test 133.8 is YES, then the minimum cost neighbour of $U_k$ (e. g. $\hat{U}_k$) replaces $U_k$ as new current configuration.

If the answer to the test 133.8 is NO, and the selected strategy is local search, the current configuration is the best configuration reachable by the method from the assigned start configuration $U_{start}$ and the local minimum $U_{fin} = U_{best}$ is reached.

If the answer to the test 133.8 is NO and the selected strategy is tabu search, then a termination test 133.10 is applied in order to decide if the algorithm has to be stopped or it has to continue.

An example of termination test applied for the tabu search strategy is the following one: a parameter $R_{max}$ (an integer assigned by the user) sets the maximum number of optimization cycles for which $U_{best}$ is not updated.

$R_{max}$ can be "tuned" by the user. It should be chosen taking into account the "size" of the problem. Values from 10 to 60 are a reference range for small (up to 10 nodes) and medium size (some tenths of nodes) problems.

The termination criterion work as follow: optimization cycles going on according the procedure depicted in Figure 9 and explained above. Optimization cycles in tabu search gives always a transition in their neighbour, sometimes exploring a cost reduction and sometime not. When the optimization cycles without a cost reduction of the configuration is $R_{max}$ the algorithm ends and the current best configuration is the local minimum.

Going back to the decision block 133.4, if the answer is YES the right branch out is followed and the best neighbour $\hat{U}_k$ is updated in step 133.9. This means that if the neighbour $m$ of $U_k$ costs less than $U_k$, then it becomes the updated minimum cost neighbour $\hat{U}_k$; otherwise the minimum/least cost neighbour does not change. After the block 133.9, a test 133.5 is performed for comparing the cost of the neighbour under analysis with the cost of current configuration. If the cost of the neighbour is less than the cost of the current configuration (i.e. the answer is NO), then the neighbour is excluded as a candidate for replacing the current configuration and the procedure evolves towards the decision block 133.6 whose function was already explained.

If the answer to the test 133.5 is YES, then the next action depends upon the descent strategy chosen by the user. If the descent strategy selected by the user is the first improvement (the answer to the test 133.7 is YES) the neighbour is accepted as the new current configuration and the procedure evolves towards the block 133.1 for a new neighbouring cycle.

Otherwise if the answer to the test 133.7 is NO (which means that the descent strategy is the steepest descent), the control go to the decision block 133.6 in order to complete the neighbourhood exploration.

The following basic operation set is implemented for setting up the neighbourhood of a given configuration $U_k$:

  add arc,
  remove arc,
  exchange a couple of arcs.

"Add," means that given a configuration $U_k$ the neighbour has one additional arc not present in $U_k$.

"Remove" conversely means reducing the graph of $U_k$ of one of the existing arcs.

"Exchange" means a double variation: removing an arc and adding an arc (however, the arc added must not be the one just removed in the same operation).

When setting up the neighbourhood by resorting to any of the basic operations above, the arcs added or removed to the reference configuration satisfy the constraints imposed by the input topological matrix $T$ (which strictly define the arcs that are not allowed and the arcs that are forced to belong to the configuration).

By combining the three basic approaches described above, four different neighbourhood strategies result.

a) Add and remove. The simplest neighbourhood strategy consists in examining all the configurations obtained from the current one by adding or removing an arc. The number of neighbours is $A$, where $A = N(N-1)/2$ is the number of potential arcs of the current configuration and N the number of nodes. The size of neighbourhood is $\alpha\ N^2$.

b) Add, remove and full exchange. The evaluation of neighbours of strategy a) (add and remove) is extended to all the configurations obtained by exchanging each arc involved in the current topology with a arc that is not a part of it. The size of the neighbourhood is $A^2/2$ and thus $\alpha\ N^4$.

c) Add, remove and linear exchange. In order to reduce the size of the neighbourhood obtained with the strategy b), the possible exchanges are limited by selecting the best neighbours obtained with an arc add (remove) and effecting arc removal (add) of all the other arcs included (not included) part of the reference topology. Essentially this amounts to limiting the evaluation of previous step b) to the neighbouring configurations obtained by:

i) adding an arc leading to a best configuration and selectively, individually removing all the arcs included in the given topology, and

ii) removing an arc leading to a best configuration and selectively, individually adding all the arcs not included in the given topology.

In this case the neighbourhood size is $2A$ and then the size of neighbourhood is $\propto N^2$ (i. e. quadratic, as is the case with the strategy a)).

d) Add, remove and pivot node-exchange. This is another strategy that reduces the exchanges to those couples of arcs that have one of their termination nodes in common. This rule allows reducing the size of the neighbourhood from $A^2/2$ (full exchange) to about $A^{3/2}$ and then the size of the neighbourhood is $\propto N^3$ .

The neighbourhood of a) is included in b), c) and d). The neighbourhoods of c) and d) are included in b).

All of the neighbourhood strategies above are implemented in the block 133.2 and the user may select the strategy to be used during the optimization. The larger the size of a neighbourhood the higher the effort to be devoted to examining all the configurations taking part in it.

The choice of the strategy depends on the effort budget the user can spend for a given optimization session. The strategies a) and c) are remarkably less time consuming than strategy b). Strategy d) is a sort of intermediate solution when compared with a) and c) on the one side and with b) on the other side.

Coming back to the main procedure shown in Figure 4 at the end of the optimization search 133, the decision block checks if a diversification step is necessary. If the answer is NO, the procedure ends. Otherwise, a diversification step is necessary and the initial configuration is set in the step 134.

The flow chart of Figure 10 explains how the diversification step operates. The reference configuration $U_{ref}$ designated 134.1 used as the input for the diversification step is the best configuration or the one reached at the end of the last optimization cycle, depending on the alternative chosen by the user.

After the configuration $U_{ref}$ is complemented by a block 134.2. If a node A and a node B are connected in the configuration $U_{ref}$, then they are not connected in the new one, and if the same nodes are not connected in the configuration $U_{ref}$, they are connected in the new one. Complementing $U_{ref}$ does not assure the feasibility of the complemented configuration (in general the more connected the reference configuration is, the lower is the probability to obtain a feasible complemented configuration at the first step). The block CADB 131 is applied to the current configuration and, if thus results infeasible, additional arcs are added to the current configuration by the block 134.4 until feasibility is reached. When the decision block 134.3 verifies the feasibility of the configuration, the input $U_{start}$ (designated 134.5) for the next optimization cycle is ready.

One of the significant aspects of the tabu search approach described above is the neighbour evaluation procedure and, in particular, the network loading algorithm under the OSPF-ECM splitting rule and the max-hop constraints.

These aspects involve the flow routing engine (FRE) associated with the Configuration and Dimensioning Block (CADB - see Figure 5) and its use in the entire process for the neighbour evaluation process shown in Figure 9, which involves neighbour evaluation by means a sequence of neighbours generation and evaluation steps. The basic concept applied in the method is to maintain in as much as possible the data (routing information and link loading on the topology arcs) achieved by computation already performed in the previous steps and update data evaluation only in respect of the elements that are affected by the last perturbation on the configuration.

More specifically, the most significant issues are related to the high number of shortest paths one has to deal with in real size instances. In fact, one must determine all the equivalent shortest paths, for all the ordered couple of nodes, which are the source and destination of the traffic flows for all the failure scenarios - by taking also into account all the possible maximum numbers of hops. For that reason, the solution evaluation in the optimizing procedure represents a bottleneck for the whole efficiency of the algorithm.

As shown two complementary methods are used to overcome the related difficulties: an incremental neighbourhood evaluation and the use of reduced dimension neighbourhoods (add and remove, add, remove and linear exchange and add, remove and pivot-node exchange).

The basic idea leading to an incremental neighbourhood evaluation is that the generation of a neighbour solution introduces a small perturbation in the topology of the current solution. As a consequence, the majority of the shortest paths are not affected by such perturbation: if the set of unaffected shortest paths is efficiently detected, the computational time related to their definition is saved. We consider the basic adding and removing moves. In fact the moves that operates an arc exchange move, either for implementing the linear exchange neighbourhood or the pivot-node exchange neighbourhood, can be obtained by a sequence of two elementary changes, a removing move and an adding move.

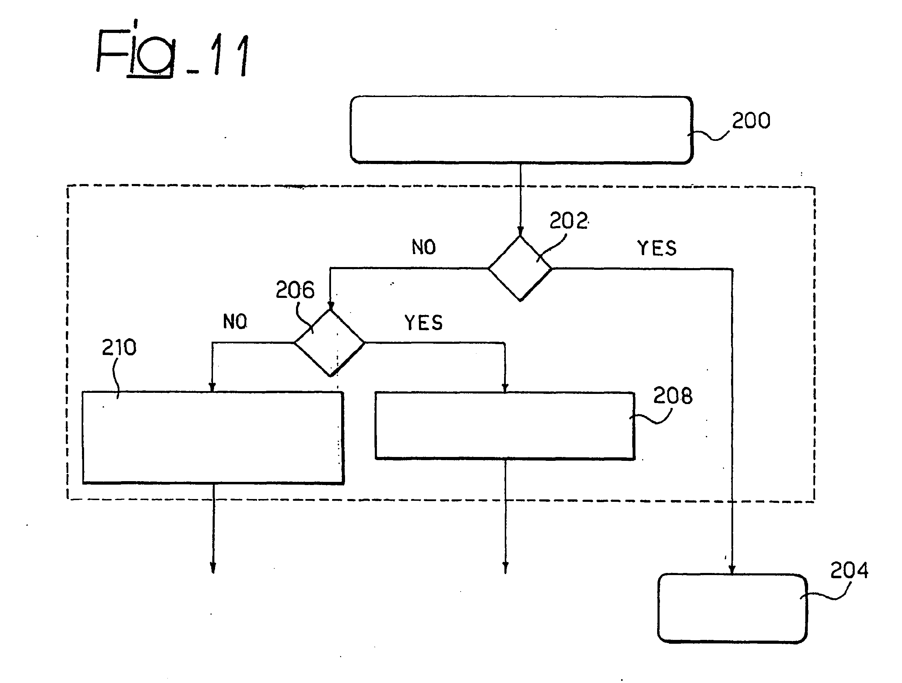

In order to detect the routing affected in case of arc removal, one distinguishes several cases. Each traffic flow has a primary routing, for the nominal scenario, and, if protected, a restoration routing for each failure scenario. Each routing is, in general, a set of hop constrained shortest paths (rather than a single path). The new routing can be evaluated by the procedure depicted in Figure 11: Incremental arc removing evaluation (IAR).

First of all, IAR procedure is applied to the primary routing and to the arc under elimination.

After a start step 200, two cases are possible: all the primary shortest paths use the removed arc or, on the contrary, at least one shortest path survives; only in the former case the new set of shortest paths must be recomputed. The situation is checked in a step 202. If none of the shortest paths passes through the removed arc (positive outcome of the step 202), the routing of the traffic is totally unaffected and the previous loading is maintained (step 204). If the step 202 yields a negative outcome, a check is made in a step 206 as to whether:

- at least one primary shortest path is not affected, or
- all the shortest paths use the removed arc.

In the former case (positive outcome of the step 206), the traffic flow is routed on the survived shortest paths (step 208).

In the latter case (negative outcome of the step 206), the routing of the flow is re-computed, by evaluating the new hop constrained shortest paths and the related flow splitting (step 210).

The evaluation of the restoration paths is more complex since an additional check is needed to determine whether the traffic flow is still affected by the element (node or link) fault related to the restoration path itself.

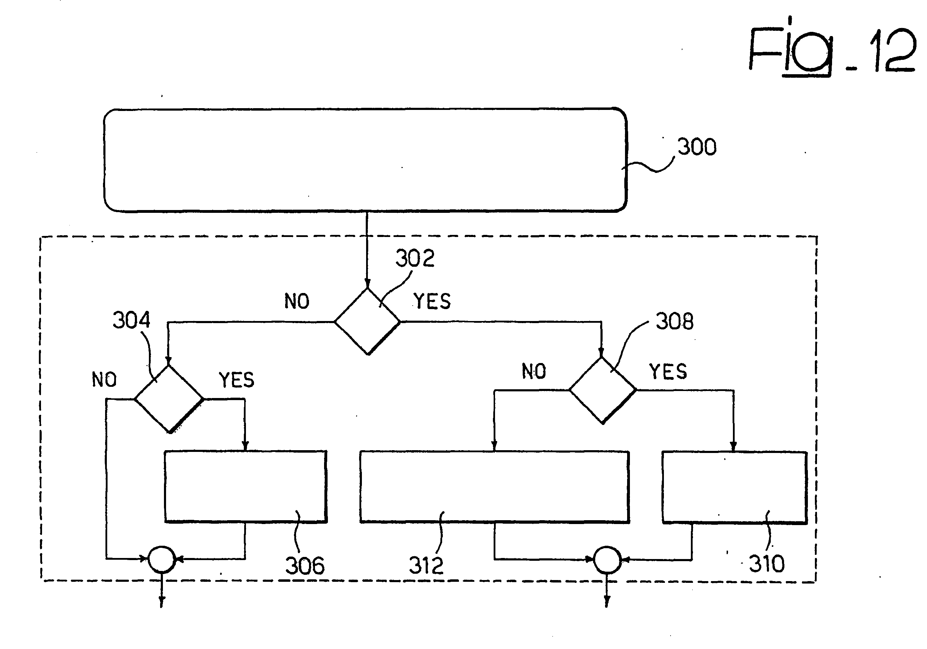

For each possible element failure, the procedure depicted in Figure 12 is applied.

The input of the procedure (start step 300) consists of the removed arc, the new primary routing (as determined by the IAR procedure), the old primary routing of the flow (before removing the arc) and the old restoration routing under the element failure (if it exists), before removing the arc.

In a step 302 a check is made as to whether the new primary routing is affected by the failure. If the check yields a negative outcome, two cases are possible that are checked in a further step 304.

If the old primary routing is affected by the failure (positive outcome of the step 304), then the related restoration flow is removed from the old restoration path (step 306) since no capacity is needed to protect the failure itself. Otherwise (negative outcome of the step 304) no operation must be performed.

In both cases checked in the step 304, no new restoration routings are required.

If the new primary routing is affected by the failure (positive outcome of the step 302), two cases are again possible, that are checked in a step 308.

If the old primary routing is also affected by the fault (positive outcome of the step 308), a restoration routing already exists and the IAR procedure is applied to it (step 310).

Otherwise (negative outcome of the step 308), a new routing must be computed (step 312).

In both cases checked in the step 308, the routing paths are the new routings.

If the primary routing remains valid, the traffic is affected by the same element faults, so that only the efficient block 310 is performed.

If the primary routing is partially valid (i.e. only a subset of the equivalent shortest paths uses failed elements, e.g. arcs), the traffic flow is affected by a subset of the previous node faults and the time consuming block 312 is not performed.

In fact the block 312 is used only if the primary routing changes: the new primary routing might include different nodes, and the block 312 is activated in order to compute the restoration paths for the new failures affecting the new primary path.

Even if several cases must be checked, the ) resulting procedure is very efficient, since the shortest path re-computation is needed only for a small subset of routing paths, while most of the routing remains valid (more than 90%, in the case of arc removal move applied to 10 node instances).

In the case of an adding move the shortest path sub-optimality principle is exploited to efficiently ascertain whether the introduction of a new arc in the topology affects the shortest path set for a given traffic flow.

Let us consider the addition of an arc ($i$,j) and a traffic flow between node $s$ and node $t$, with a maximum number of hops equal to $h$. The introduction of the new arc affects the routing of the given traffic flow if and only if a $h$-hop constrained shortest path exists from $s$ to $t$ using arc $(i,j)$, whose total weight is less or equal to the current shortest distance between $s$ and t.

To derive the weight of an $h$-hop constrained shortest path from $s$ to $t$, one simply considers two sub-paths: $P_1$ between $s$ and $i$ (resp . $j$) and $P_2$ between $j$ (resp. $i$) and $t$, such that the number of hops $k$ of the path $P_1 \cup (i,j) \cup P_2$ is less or equal to $h$. Different combinations must be considered, including all different hop-compatible sub-paths. To improve efficiency, one can consider that the smaller the number of hops, the higher the weight of the related shortest paths. It is then sufficient to consider the sub-path combinations for $h$ hops: if the derived shortest path is less or equal to the one in the current solution, then the routing must be computed again, otherwise, it is still valid. The information on the weights of the shortest sub-paths is usually available from the current solution. In fact, for real instances, traffic is evenly distributed over all couples of nodes and, additionally there is a substantial likelihood to have traffic flows between any couples of nodes routed on shortest paths with any possible number of hops. As a consequence, one can efficiently derive the weights of the hop constrained shortest paths in the neighbour solution and check all the different cases considered above for the arc removing move: since just a minor amount of routing must be recomputed, the neighbour solution can be quickly evaluated.

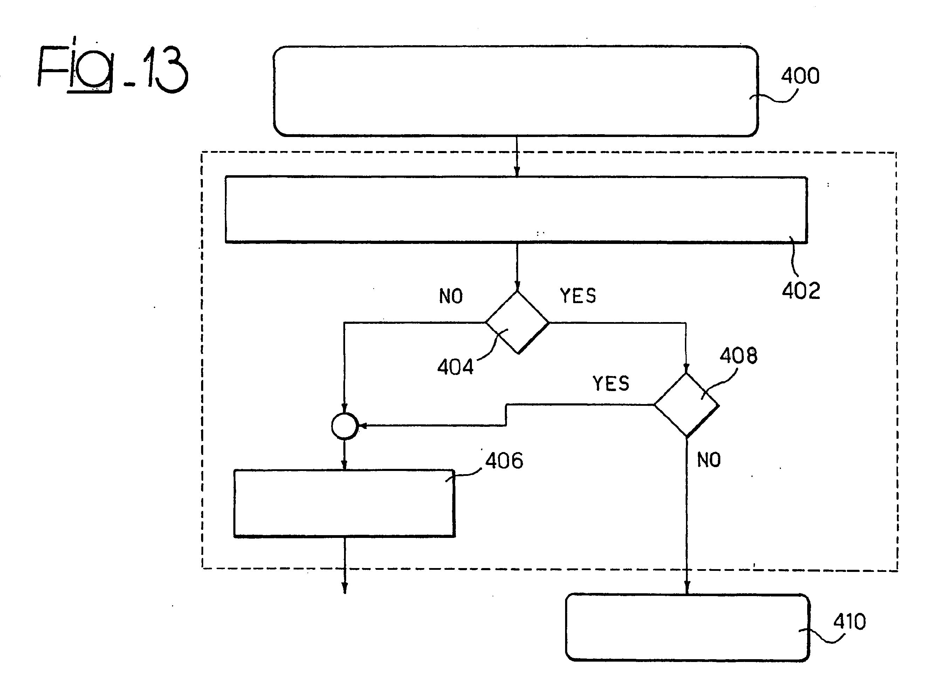

The observations above are summarized in the procedure depicted in Figure 13. This performs the incremental evaluation of the shortest paths for a given traffic flow (which max-hop constraint is equal to $h$) under a given failure (or nominal) scenario when an arc is added to the current topology. First of all, in an input step 400, the procedure tries to efficiently compute the weight of an h-hops constrained shortest path, by exploiting the sub-path optimality principle described above (block 402): the sub-paths are provided by the current solution (before adding the new arc) under the given failure scenario.

In a step 404 a check is made as to whether this weight can be evaluated using the sub-paths available in the current solution or not.

If the new weight is not available (negative outcome of the step 404), then the routing is recomputed (block 406).

If the weight of the shortest path passing through the new arc is available (positive outcome of the step 404), the procedure checks in a step 408 if this weight is less or equal to the weight considered by the current solution.

For positive outcome of the step 408 the shortest paths must be recomputed (step 406), otherwise (negative outcome of the step 408) the old shortest paths remain valid and the routing is not changed (step 410).

The efficiency of incremental evaluation is increased if the routing weights matrix is symmetric, as is very often the case in real instances. In fact, once the information is derived for a traffic flow from a node $s$ to a node $t$, the same is valid for the flow from $t$ to $s$.

Computational time is improved also by reducing the number of solution evaluations for each neighbourhood, i.e. using neighbourhoods of reduced dimension, while trying to preserve their effectiveness.

Analysis of the add, remove and full exchange neighbourhood shows that quite often the swap move leading to the best (and then selected) neighbour solution involves the arc corresponding to the best addition or removal. As a consequence, the add, remove and linear exchange steps were developed. Besides, swapping two arcs at a large topological distance only occasionally produces a chosen neighbour. This behaviour can be explained in connection with the routing protocol (splitting traffic flows on hop constrained shortest paths). In fact, swapping two "distant" arcs does not change significantly the routing of the traffic, hence solutions with slightly different costs are obtained. For that reason, the add, remove and pivot-node exchange steps were developed, where the swapping moves include only couples of closely related arcs.

The add, remove and linear exchange and add, remove and pivot-node exchange processes have reduced dimensions and, hence, lead to reduced computational times. Even if the quality of the solutions obtained by means of these neighbourhoods may ultimately be not very high, the quality can be effectively improved by the diversification step described above.

**Claims**

1. A method for configuring a communication network, including the steps of:

    - identifying (132) a given network configuration having a given network topology based on arcs having associated administrative routing weights and including a number of given shortest paths,
    - generating (133.2) at least one neighbouring configuration by producing in said network topology a perturbation by leaving said administrative routing weights unaffected and wherein the majority of the shortest paths in said neighbouring configuration are comprised of shortest paths from said number left unaffected by said perturbation and combinations of shortest paths from said number,

- subjecting said at least one neighbouring configuration to a feasibility test (133.4) in terms of resilience of said at least one neighbouring configuration against failure in said network topology;
- evaluating (131, 133.5, 133.6) said neighbouring configuration against said given configuration based on a given cost function, whereby said evaluation involves only the portion of said network topology affected by said perturbation, and
- substituting (133.8, 133.10) said at least one neighbouring configuration for said given configuration if said at least one neighbouring configuration is found to represent an improvement over said given configuration based on said cost function, **characterised in that** said feasibility test comprises:
- classifying the traffic transported over said communication network in a first class R of traffic to be re-routed in case of network failure and a second class U of traffic adapted to be lost in case of network failure, and
- checking said at least one neighbouring configuration in terms of resilience taken as the capability of re-routing said first class of traffic R in case of network failure.

2. The method of claim 1, **characterized in that** it includes the steps of subsequently generating (133.2) a plurality of said neighbouring configurations (133.3), and evaluating (133.5, 133.6) each said neighbouring configuration of said plurality against a respective given configuration based on said given cost function.

3. The method of claim 1, **characterized in that** it includes the step of discarding (183.4) as a neighbouring solution to be evaluated against said given configuration any neighbouring solution failing to pass said check for resilience.

4. The method of claim 2, **characterized in that** it includes the step of a subsequently evaluating said neighbouring configurations of said plurality against respective given configurations based on a general search mechanism (133).

5. The method of claim 4, **characterized in that** said search mechanism is a local search mechanism wherein said given configuration is replaced by either of a lower cost neighbouring configuration or a first minimum cost neighbouring configuration found in the case of first improvement.

6. The method of claim 4, **characterized in that** said search mechanism is a tabu search mechanism wherein said given configuration is replaced by a minimum cost neighbouring configuration even if the cost of said neighbouring configuration is higher than the cost of said given configuration.

7. The method of either of claims 5 or 6, **characterized in that** it includes the step of subjecting said network topology to a diversification (134) between subsequent searches in said search mechanism.

8. The method of claim 1, **characterized in that** it includes the step of identifying said given configuration ($U_{start}$; 132.2) in the form of a user-specified configuration.

9. The method of claim 1, **characterized in that** it includes the step of identifying said given configuration ($U_{start}$; 132.2) in the form of a fully connected configuration including a fully connected topology specified configuration.

10. The method of claim 1, **characterized in that** it includes the step of identifying said given configuration ($U_{start}$; 132.2) by defining a starting topology and selectively adding to said starting topology arcs of a user-specified configuration.

11. The method of any of claims 8 to 10, **characterized in that** it includes the step of analyzing (121) said given configuration in terms of topology feasibility.

12. The method of claim 10, **characterized in that** it includes the step of adding arcs to said starting configuration to reach a lowest cost configuration admissible in terms of topology.

13. The method of claim 1, **characterized in that** it includes the step of evaluating said neighbouring configuration against said given configuration based on either of a steepest descent or first improvement descent strategy.

14. The method of claim 1, **characterized in that** said step of generating (133.2) said at least one neighbouring solution includes producing a perturbation in said network topology includes at least one of the steps of:

- adding an arc to said given network topology,
- removing an arc in said given network topology, and
- exchanging a couple of arcs in a said given network topology.

**15.** The method of claim 14, **characterized in that** said step of generating (133.2) said at least one neighbouring solution by producing a perturbation in said network topology includes at least one of the operations of:

- a) examining at least one set of configurations obtained by adding or removing an arc from said given network topology,
- b) evaluating, in addition to all the configurations examined in step a) all the configurations obtained by exchanging each arc involved in said given network topology with a arc that is not included in said given network topology,
- c) limiting the evaluation of previous step b) to the neighbouring configurations obtained by:

i) adding an arc leading to a best configuration in said set based on said given cost function and selectively individually removing all the arcs included in said given topology, and
ii) removing an arc leading to a best configuration in said set based on said given cost function and selectively individually removing all the arcs not included in said given topology, and

- d) limiting said step of exchanging a couple of arcs to those couples of arcs that have one of their termination nodes in common.

**16.** The method of claim 1, **characterized in that** it includes the step of performing a check in said at least one neighbouring configuration to determine whether traffic flow in said network is affected by any fault in said network topology related to restoration paths.

**17.** The method of claim 16, **characterized in that** said check involves ascertaining at least one of the following conditions:

- the primary routing of said given network configuration remains valid for said neighbouring configuration, whereby the traffic is affected by the same element faults,
- said primary routing is partially valid for said neighbouring configuration, **in that** a subset of equivalent shortest paths in said neighbouring configuration uses failed elements, whereby a traffic flow is affected by a subset of the faults in said given configuration,
- said primary routing changes for said neighbouring configuration with respect to said given configuration, whereby the set of node element to be protected against failure is different for said neighbouring configuration with respect to said given configuration wherein a new set of routing path must be computed, and
- the primary routing for said neighbouring configuration is modified and can no longer be affected by a set of element failures likely to affect said given configuration, whereby a restoration capacity assigned to protected traffic flow in said given configuration is removed.

**18.** A system adapted to configure a communication network, the system being :

- identifye (132) a given network configuration having a given network topology based on arcs having associated administrative routing weights and including a number of given shortest paths,
- generate (133.2) at least one neighbouring configuration by producing in said network topology a perturbation by leaving said administrative routing weights unaffected and wherein the majority of the shortest paths in said neighbouring configuration are comprised of shortest paths from said number left unaffected by said perturbation and combinations of shortest paths from said number,
- subject said at least one neighbouring configuration to a feasibility test (133.4) in terms of resilience of said at least one neighbouring configuration against failure in said network topology;
- evaluate (131, 133.5, 133.6) said neighbouring configuration against said given configuration based on a given cost function, whereby said evaluation involves only the portion of said network topology affected by said perturbation, and
- substitute (133.8, 133.10) said at least one neighbouring configuration for said given configuration if said at least one neighbouring configuration is found to represent an improvement over said given configuration based on said cost function, **characterized in that** said feasibility test comprises:
- classify the traffic transported over said' communication network in a first class R of traffic to be re-routed in case of network failure and a second class U of traffic adapted to be lost in case of network failure, and
- check said at least one neighbouring configuration in terms of resilience taken as the capability of re-routing said first class of traffic R in case of network failure.

19. The system of claim 18, **characterized in that** the system is configured for subsequently generating (133.2) a plurality of said neighbouring configurations (133.3), and evaluating (133.5, 133.6) each said neighbouring configuration of said plurality against a respective given configuration based on said given cost function.

20. The system of claim 18, **characterized in that** the system is configured for discarding (183.4) as a neighbouring solution to be evaluated against said given configuration any neighbouring solution failing to pass said check for resilience.

21. The system of claim 19, **characterized in that** the system is configured for subsequently evaluating said neighbouring configurations of said plurality against respective given configurations based on a general search mechanism (133).

22. The system of claim 21, **characterized in that** said search mechanism is a local search mechanism wherein said given configuration is replaced by either of a lower cost neighbouring configuration or a first minimum cost neighbouring configuration found in the case of first improvement.

23. The system of claim 21, **characterized in that** said search mechanism is a tabu search mechanism wherein said given configuration is replaced by a minimum cost neighbouring configuration even if the cost of said neighbouring configuration is higher than the cost of said given configuration.

24. The system of either of claims 22 or 23, **characterized in that** the system is configured for subjecting said network topology to a diversification (134) between subsequent searches in said search mechanism.

25. The system of claim 18, **characterized in that** the system is configured for identifying said given configuration ($U_{start}$; 132.2) in the form of a user-specified configuration.

26. The system of claim 18, **characterized in that** the system is configured for identifying said given configuration ($U_{start}$; 132.2) in the form of a fully connected configuration including a fully connected topology specified configuration.

27. The system of claim 18, **characterized in that** the system is configured for identifying said given configuration ($U_{start}$; 132.2) by defining a starting topology and selectively adding to said starting topology arcs of a user-specified configuration.

28. The system of any of claims 25 to 27, **characterized in that** the system is configured for analyzing (121) said given configuration in terms of topology feasibility.

29. The system of claim 27, **characterized in that** the system is configured for adding arcs to said starting configuration to reach a lowest cost configuration admissible in terms of topology.

30. The system of claim 18, **characterized in that** the system is configured for evaluating said neighbouring configuration against said given configuration based on either of a steepest descent or first improvement descent strategy.

31. The system of claim 18, **characterized in that** the system is configured for generating (133.2) said at least one neighbouring solution includes by producing a perturbation in said network topology, the system being configured for performing at least one of the operations of:

- adding an arc to said given network topology,
- removing an arc in said given network topology, and
- exchanging a couple of arcs in a said given network topology.

32. The system of claim 31, **characterized in that** the system is configured for generating (133.2) said at least one neighbouring solution by producing a perturbation in said network topology, the system being configured for performing at least one of the operations of:

- a) examining at least one set of configurations obtained by adding or removing an arc from said given network topology,
- b) evaluating, in addition to all the configurations examined in step a) all the configurations obtained by exchanging each arc involved in said given network topology with a arc that is not included in said given network topology,
- c) limiting the evaluation of previous step b) to the neighbouring configurations obtained by:

i) adding an arc leading to a best configuration in said set based on said given cost function and selectively individually removing all the arcs included in said given topology, and

ii) removing an arc leading to a best configuration in said set based on said given cost function and selectively individually adding all the arcs not included in said given topology, and

- d) limiting said step of exchanging a couple of arcs to those couples of arcs that have one of their termination nodes in common.

33. The system of claim 18, **characterized in that** the system is configured for performing a check in said at least one neighbouring configuration to determine whether traffic flow in said network is affected by any fault in said network topology related to restoration paths.

34. The system of claim 33, **characterized in that** the system is configured for performing said check by ascertaining at least one of the following conditions:

- the primary routing of said given network configuration remains valid for said neighbouring configuration, whereby the traffic is affected by the same element faults,
- said primary routing is partially valid for said neighbouring configuration, **in that** a subset of equivalent shortest path in said neighbouring configuration uses failed elements, whereby a traffic flow is affected by a subset of the faults in said given configuration,
- said primary routing changes for said neighbouring configuration with respect to said given configuration, whereby the set of node element to be protected against failure is different for said neighbouring configuration with respect to said given configuration wherein a new set of routing path must be computed, and
- the primary routing for said neighbouring configuration is modified and can no longer be affected by a set of element failures likely to affect said given configuration, whereby a restoration capacity assigned to protected traffic flow in said given configuration is removed.

35. A communication network including a system according to any of claims 18 to 34.

36. A computer program product loadable in the memory of at least one computer and including software code portions for performing the method of any of claims 1 to 17.

**Patentansprüche**

1. Verfahren zur Konfiguration eines Kommunikationsnetzwerkes mit folgenden Schritten:

Identifizieren (132) einer vorgegebenen Netzwerkskonfiguration, die eine vorgegebene Netzwerkstopologie aufweist, basierend auf Bögen, die assoziierte administrative Routinggewichte aufweisen, und eine Anzahl von vorgegebenen kürzesten Wegen einschließen;
Erzeugen (133.2) zumindest einer benachbarten Konfiguration durch ein Erzeugen einer Störung in der Netzwerkstopologie, in dem die administrativen Routinggewichte unverändert bleiben, wobei die Mehrzahl der kürzesten Wege in der benachbarten Konfiguration durch kürzeste Wege aus der Anzahl gebildet sind, die von der Störung unverändert blieben, und durch Kombinationen kürzester Wege aus der Anzahl gebildet sind;
Unterwerfen der zumindest einen Nachbarkonfiguration einem Machbarkeitstest (133.4) bezüglich der Ausfallsicherheit der zumindest einen Nachbarkonfiguration gegenüber einem Versagen der Netzwerkstopologie;
Bewerten (131, 133.5, 133.6) der Nachbarkonfiguration gegenüber der vorgegebenen Konfiguration basierend auf einer vorgegebenen Kostenfunktion, wobei das Bewerten nur den Teil der Netzwerkstopologie einschließt, der durch die Störung beeinflusst wird, und
Ersetzen (133.8, 133.10) der vorgegebenen Konfiguration durch die zumindest eine Nachbarkonfiguration für den Fall, dass die zumindest eine Nachbarkonfiguration eine Verbesserung gegenüber der vorgegebenen Konfiguration basierend auf der Kostenfunktion darstellt,
**dadurch gekennzeichnet, dass**
der Machbarkeitstest umfasst:

ein Klassifizieren des Traffics, der über das Kommunikationsnetzwerk transportiert wird, in eine erste Klasse R von Traffic, wobei die erste Klasse R von Traffic im Fall eines Netzwerksversagens umgeleitet wird, und in eine zweite Klasse U von Traffic, die im Fall eines Netzwerksversagens verloren geht, und
ein Überprüfen der zumindest einen Netzwerkskonfiguration in Bezug auf die Ausfallsicherheit, die als die Fähigkeit eines Umleitens der ersten Klasse R von Traffic im Falle eines Netzwerksversagens genommen wird.

2. Das Verfahren nach Anspruch 1, **dadurch gekennzeichnet, dass** es folgende Schritte einschließt:

anschließendes Erzeugen (133.2) einer Vielzahl von Nachbarkonfigurationen (133.3) und Bewerten (133.5, 133.6) jeder Nachbarkonfiguration aus der Vielzahl gegenüber einer entsprechend vorgegebener Konfiguration basierend auf der vorgegebenen Kostenfunktion.

3. Verfahren nach Anspruch 1, **dadurch gekennzeichnet, dass** es den Schritt des Verwerfens (183.4) jeder Nachbarkonfiguration, die gegenüber der vorgegebenen Konfiguration bewertet wurde und den Machbarkeitstest nicht bestanden hat, umfasst.

4. Verfahren nach Anspruch 2, **dadurch gekennzeichnet, dass** es den Schritt eines anschließenden Bewertens der Nachbarkonfigurationen aus der Vielzahl gegenüber der entsprechend vorgegebenen Konfigurationen basierend auf einen allgemeinen Suchmechanismus (133) umfasst.

5. Verfahren nach Anspruch 4, **dadurch gekennzeichnet, dass** der Suchmechanismus ein lokaler Suchmechanismus ist, wobei die vorgegebene Konfiguration entweder ersetzt wird durch eine Nachbarkonfiguration mit geringeren Kosten oder durch eine Nachbarkonfiguration mit einem ersten Minimum in den Kosten, die als erste Verbesserung gefunden wurde.

6. Verfahren nach Anspruch 4, **dadurch gekennzeichnet, dass** der Suchmechanismus ein Tabu-Suchalgorithmus ist, worin die vorgegebene Konfiguration ersetzt wird durch eine Nachbarkonfiguration mit minimalen Kosten, selbst wenn die Kosten der Nachbarkonfiguration höher sind als die Kosten der vorgegebenen Konfiguration.

7. Verfahren nach einem der Ansprüche 5 oder 6, **dadurch gekennzeichnet, dass** es den Schritt eines Anwendens einer Diversifikation (134) auf die Netzwerktopologie zwischen dem anschließenden Suchen in dem Suchmechanismus umfasst.

8. Verfahren nach Anspruch 1, **dadurch gekennzeichnet, dass** es den Schritt eines Identifizierens der vorgegebenen Konfiguration ($U_{start}$; 132.2) in der Form einer nutzerspezifischen Konfiguration umfasst.

9. Verfahren nach Anspruch 1, **dadurch gekennzeichnet, dass** es den Schritt eines Identifizierens der vorgegebenen Konfiguration ($U_{start}$; 132.2) in Form einer umfassend verbundenen Konfiguration einschließlich einer umfassend verbundenen Topologie spezifizierten Konfiguration umfasst,

10. Verfahren nach Anspruch 1, **dadurch gekennzeichnet, dass** es den Schritt eines Identifizierens der vorgegebenen Konfiguration ($U_{start}$; 132,2), durch ein Definieren einer Starttopologie und eines selektiven Hinzufügens von Bögen einer benutzerspezifischen Konfiguration zu der Starttopologie umfasst.

11. Verfahren nach einem der Ansprüche 8 bis 10, **dadurch gekennzeichnet, dass** es den Schritt eines Analysierens (121) umfasst, wobei das Analysieren ein Analysieren der vorgegebenen Konfiguration mit Hilfe der Topologie-Realisierbarkeit umfasst.

12. Verfahren nach Anspruch 10, **dadurch gekennzeichnet, dass** es den Schritt eines Hinzufügens von Bögen zu der Startkonfiguration umfasst, um eine Konfiguration mit niedrigsten Kosten, die in der Topologie erlaubt ist, zu erreichen.

13. Verfahren nach Anspruch 1, **dadurch gekennzeichnet, dass** es den Schritt eines Bewertens der Nachbarkonfiguration gegenüber der vorgegebenen Konfiguration umfasst, wobei das Bewerten entweder auf eine Strategie des steilsten Abfalls oder auf eine Strategie der ersten Korrektur im Abfall beruht.

14. Verfahren nach Anspruch 1, **dadurch gekennzeichnet, dass** der Schritt des Erzeugens (133.2) der zumindest einen Nachbarlösung ein Erzeugen einer Störung in der Netzwerktopologie einschließt und zumindest eine der folgenden Schritte umfasst:

Hinzufügen eines Bogens zu der vorgegebenen Netzwerktopologie,
Entfernen eines Bogens von der vorgegebenen Netzwerktopologie, und
Austauschen eines Paares von Bögen in der vorgegebenen Netzwerktopologie.

15. Verfahren nach Anspruch 14, **dadurch gekennzeichnet, dass** der Schritt des Erzeugens (133.2) der zumindest einen Nachbarlösung durch ein Erzeugen einer Störung in der Netzwerktopologie zumindest eine der folgenden Operationen einschließt:

a) Prüfen von zumindest einem Satz von Konfigurationen, die durch ein Hinzufügen oder Entfernen eines Bogens von der gegebenen Netzwerktopologie erhalten wurden,
b) zusätzlich zu allen im Schritt a) geprüften Konfiguration Bewerten aller Konfigurationen, die durch einen Austausch jedes Bogens, der in der vorgegebenen Netzwerktopologie enthalten ist, mit einem Bogen, der nicht in der vorgegebenen Netzwerktopologie enthalten ist, erhalten wurden,
c) Einschränken der Bewertung des vorhergehenden Schritts b) auf Nachbarkonfigurationen, die erhalten wurden durch:

i) Hinzufügen eines Bogens, um basierend auf der vorgegebenen Kostenfunktion zu einer besten Konfiguration in dem Satz zu gelangen, und selektives individuelles Entfernen von allen Bögen, die in der vorgegebenen Topologie enthalten sind, und
ii) Entfernen eines Bogens, um basierend auf der vorgegebenen Kostenfunktion zu einer besten Konfiguration in dem Satz zu gelangen, und selektives individuelles Entfernen aller der Bögen, die nicht in der vorgegebenen Topologie enthalten sind, und

d) Einschränken des Schrittes des Austauschens eines Paares von Bögen auf solche Paare von Bögen, die einen Endknoten gemein haben.

16. Verfahren nach Anspruch 1, **dadurch gekennzeichnet, dass** es den Schritt eines Durchführens einer Überprüfung in der zumindest einen Nachbarkonfiguration umfasst, um zu bestimmen, ob der Traffic-Fluss in dem Netzwerk durch ein Fehler in der Netzwerkstopologie in Folge eines wiederhergestellten Pfades negativ beeinflusst wird.

17. Verfahren nach Anspruch 16, **dadurch gekennzeichnet, dass** die Überprüfung ein Feststellen von zumindest einer der folgenden Bedingungen umfasst:

das Primärrouting der vorgegebenen Netzwerkkonfiguration für die Nachbarkonfiguration bleibt gültig, wobei der Traffic durch die gleichen Element-Fehler beeinflusst wird,
das Primärrouting ist teilweise für die Nachbarkonfiguration gültig, sodass ein Teil von äquivalenten kürzesten Pfaden in der Nachbarkonfiguration fehlgeschlagene Elemente nutzen, wodurch der Traffic-Fluss durch einen Teil der Fehler in der vorgegebenen Konfiguration beeinflusst wird,
das Primärrouting wechselt für die Nachbarkonfiguration in Bezug auf der vorgegebenen Konfiguration, wodurch der Satz der Knotenelemente, die gegenüber ein Versagen geschützt sind, in der Nachbarkonfiguration in Bezug auf der vorgegebenen Konfiguration unterschiedlich ist, wobei ein neuer Satz von Routing-Pfaden berechnet werden muss, und
das Primärrouting für die Nachbarkonfiguration modifiziert wird und nicht mehr länger durch den Satz von Ausfällen von Elementen, die wahrscheinlich die vorgegebene Konfiguration beeinflussen, beeinflusst wird, wodurch eine Wiederherstellungskapazität, die einem geschützten Traffic-Fluss in der vorgegebenen Konfiguration zugewiesen ist, entfernt wird.

18. Ein System, das ausgebildet ist, um ein Kommunikationsnetzwerk zu konfigurieren und um:

eine vorgegebene Netzwerkskonfiguration mit einer vorgegeben Netzwerkstopologie zu identifizieren, wobei die vorgegebene Netzwerkstopologie auf Bögen basiert, die assoziierte administrative Routing-Gewichte aufweisen, und eine Anzahl von vorgegebenen kürzesten Pfaden einschließen;

zumindest eine Nachbarkonfiguration durch ein Erzeugen einer Störung in der Netzwerktopologie zu erzeugen, wobei die Störung **dadurch** geschaffen wird, dass die administrativen Routing-Gewichte unverändert gelassen werden und wobei die Mehrzahl der kürzesten Wege in der Nachbarkonfiguration, jene kürzesten Pfade aus der Anzahl sind, die durch die Störung und Kombinationen der kürzesten Pfade aus der Anzahl unverändert gelassen werden;

für die zumindest eine Nachbarkonfiguration ein Machbarkeitstest (133.4) durchzuführen, wobei der Machbarkeitstest bezüglich der Ausfallsicherheit der zumindest einen Nachbarkonfiguration gegenüber ein Versagen der Netzwerktopologie durchgeführt wird;

die Nachbarkonfiguration gegenüber der vorgegebenen Konfiguration zu bewerten (131, 133.5, 133.6), wobei die Bewertung auf eine vorgegebene Kostenfunktion basiert, wodurch die Bewertung nur jenen Teil der Netzwerktopologie, der durch die Störung beeinflusst wird, einschließt, und um

die zumindest eine Nachbarkonfiguration durch die vorgegebene Konfiguration zu ersetzen (133-8, 133,10), wenn die zumindest eine Nachbarkonfiguration als eine Konfiguration gefunden wird, die eine Verbesserung gegenüber der vorgegebenen Konfiguration basierend auf der Kostenfunktion darstellt,

**dadurch gekennzeichnet, dass** der Machbarkeitstest umfasst:

ein Klassifizieren des Traffics, der über das Kommunikationsnetzwerk transportiert wird, in eine erste Klasse R von Traffic, die im Fall des Netzwerkversagens umgeleitet wird, und in eine zweite Klasse U von Traffic, die so gewählt ist, dass sie im Fall eines Netzwerkversagens verloren geht, und

ein Überprüfen der zumindest einen Nachbarkonfiguration in Bezug auf einer Ausfallsicherheit, die als die Fähigkeit genommen wird, die erste Klasse des Traffics R im Falle eines Netzwerkversagens umzuleiten.

19. System nach Anspruch 18, **dadurch gekennzeichnet, dass** das System ausgebildet ist, um nacheinander folgend eine Vielzahl der Nachbarkonfigurationen zu erzeugen (133.3) und um jede der Nachbarkonfigurationen aus der Vielzahl gegenüber einer entsprechenden vorgegebenen Konfiguration basierend auf der vorgegebenen Kostenfunktion zu bewerten (133.5, 133.6).

20. System nach Anspruch 18, **dadurch gekennzeichnet, dass** das System ausgebildet ist, um jede Nachbarlösung, die den Machbarkeitstest nicht passiert, als eine Nachbarlösung, gegenüber der die vorgegebene Konfiguration zu bewerten ist, zu verwerfen (183.4).

21. System nach Anspruch 19, **dadurch gekennzeichnet, dass** das System ausgebildet ist, um nacheinander die Nachbarkonfigurationen aus der Vielzahl gegenüber den entsprechenden Konfigurationen basierend auf einem allgemeinen Suchmechanismus (133) zu bewerten.

22. System nach Anspruch 21, **dadurch gekennzeichnet, dass** der Suchmechanismus ein lokaler Suchmechanismus ist, wobei die vorgegebene Konfiguration entweder durch eine Nachbarkonfiguration mit geringeren Kosten oder durch eine Nachbarkonfiguration mit ersten minimalen Kosten, die im Fall einer ersten Verbesserung gefunden wird, ersetzt wird.

23. System nach Anspruch 21, **dadurch gekennzeichnet, dass** der Suchmechanismus ein Tabu-Suchmechanismus ist, wobei die vorgegebene Konfiguration durch eine Nachbarkonfiguration mit minimalen Kosten ersetzt wird, selbst dann, wenn die Kosten der Nachbarkonfiguration höher sind als die Kosten der vorgegebenen Konfiguration.

24. System nach einem der Ansprüche 22 oder 23, **dadurch gekennzeichnet, dass** das System ausgebildet ist, um die Netzwerktopologie einer Diversifikation (134) zwischen nachfolgenden Suchen in dem Suchmechanismus auszusetzen.

25. System nach Anspruch 18, **dadurch gekennzeichnet, dass** das System ausgebildet ist, um die vorgegebene Konfiguration ($U_{start}$; 132.2) in der Form einer Benutzerspezifischen Konfiguration zu identifizieren.

26. System nach Anspruch 18, **dadurch gekennzeichnet, dass** das System ausgebildet ist, um die vorgegebene Konfiguration ($U_{start}$; 132.2) in Form einer vollständigen verbundenen Konfiguration einschließlich einer Konfiguration voll verbundener Topologie zu identifizieren.

27. System nach Anspruch 18, **dadurch gekennzeichnet, dass** das System ausgebildet ist, um die vorgegebene Konfiguration ($U_{start}$; 132.2) durch ein Definieren einer Anfangstopologie und durch ein selektives Addieren von Bögen einer benutzerspezifischen Konfiguration zu der Anfangstopologie zu identifizieren.

28. System nach einem der Ansprüche 25 bis 27, **dadurch gekennzeichnet, dass** das System ausgebildet ist, um die vorgegebene Konfiguration in Bezug auf einer Topologierealisierbarkeit zu analysieren.

29. System nach Anspruch 27, **dadurch gekennzeichnet, dass** das System ausgebildet ist, um Bögen zu der Startkonfiguration zu addieren, um eine Konfiguration mit geringsten Kosten, die bezüglich der Topologie zugänglich ist, zu erhalten.

30. System nach Anspruch 18, **dadurch gekennzeichnet, dass** das System ausgebildet ist, um die Nachbarkonfiguration gegenüber der vorgegebenen Konfiguration basierend entweder auf einer Strategie des schnellsten Abfalls oder basierend auf einer Strategie der ersten Verbesserung für den Abfall zu bewerten.

31. System nach Anspruch 18, **dadurch gekennzeichnet, dass** das System ausgebildet ist, um zumindest eine Nachbarlösung zu erzeugen (133.2), in dem eine Störung der Netzwerktopologie erzeugt wird, wobei das System ausgebildet ist, um zumindest eine der folgenden Operationen auszuführen:

Addieren eines Bogens zu der vorgegebenen Netzwerktopologie,
Entfernen eines Bogens aus der vorgegebenen Netzwerktopologie, und
Austausch eines Paares von Bögen in der vorgegebenen Netzwerktopologie.

32. System nach Anspruch 31, **dadurch gekennzeichnet, dass** das System ausgebildet ist, um die zumindest eine Nachbarlösung zu erzeugen (133.2), in dem eine Störung der Netzwerktopologie erzeugt wird, wobei das System ausgebildet ist, um zumindest eine der folgenden Operationen auszuführen:

a) Prüfen von zumindest eines Satzes von Konfigurationen, die durch ein Hinzufügen oder ein Entfernen eines Bogens von der vorgegebenen Netzwerktopologie erhalten wird,
b) zusätzlich zu allen der Konfigurationen, die im Schritt a) geprüft wurden, Bewerten aller Konfigurationen, die durch einen Austausch jedes Bogens, der in der vorgegebenen Netzwerktopologie umfasst ist, mit einem Bogen, der nicht durch die vorgegebene Netzwerktopologie umfasst ist,
c) Beschränken der Bewertung des vorhergehenden Schrittes b) auf Nachbarkonfigurationen, die erhalten wurden durch:

i) Addieren eines Bogens, der zu einer besten Konfiguration in dem Satz basierend auf der vorgegebenen Kostenfunktion führt, und selektives individuelles Entfernen aller der Bögen, die in der vorgegebenen Topologie umfasst sind, und
ii) Entfernen eines Bogens, was zu einer besten Konfiguration in dem Satz basierend auf der vorgegebenen Kostenfunktion führt, und selektives individuelles Addieren aller der Bögen, die nicht in der vorgegebenen Topologie umfasst sind, und

d) Begrenzen des Schrittes des Austausches eines Paares von Bögen auf solchen Paaren von Bögen, die einen gemeinsamen Abschlussknoten haben.

33. System nach Anspruch 18, **dadurch gekennzeichnet, dass** das System ausgebildet ist, um eine Überprüfung in der zumindest einen Nachbarkonfiguration durchzuführen, um zu bestimmen, ob der Traffic-Fluss in dem Netzwerk durch einen Fehler in der Netzwerktopologie bezüglich wiederhergestellter Pfade, beeinflusst wird.

34. System nach Anspruch 33, **dadurch gekennzeichnet, dass** das System ausgebildet ist, um den Test durch ein Feststellen von zumindest einer der folgenden Bedingungen durchgeführt wird:

das primäre Routing der vorgegebenen Netzwerkkonfiguration bleibt für die Nachbarkonfiguration gültig, wodurch der Traffic durch denselben Element-Fehler beeinträchtigt wird,
das primäre Routing ist teilweise gültig für die Nachbarkonfiguration, sodass eine Teilmenge von äquivalenten kürzesten Wegen in der Nachbarkonfiguration ungültige Elemente nutzen, wodurch der Traffic-Fluss durch eine Untermenge von Fehlern in der vorgegebenen Konfiguration beeinträchtigt wird,
das primäre Routing für die Nachbarkonfiguration wechselt in Bezug auf die vorgegebene Konfiguration, wodurch der Satz von Knotenelementen, die gegenüber einem Versagen geschützt sind, für die Nachbarkonfiguration bezüglich der vorgegebenen Konfiguration unterschiedlich ist, wobei ein neuer Satz von Routing-Pfaden zu berechnen ist, und

das primäre Routing für die Nachbarkonfiguration verändert wird und kann nicht länger durch einen Satz von Element-Fehlern, die wahrscheinlich die vorgegebene Konfiguration beeinträchtigen, beeinträchtigt werden, wodurch eine Wiederherstellungsfähigkeit, die einem geschützten Traffic-Fluss in der vorgegebenen Konfiguration zugewiesen ist, entfernt wird.

**35.** Ein Kommunikationsnetzwerk umfassend ein System nach einem der Ansprüche 18 bis 34.

**36.** Ein Computerprogrammprodukt, das in einem Speicher von zumindest einem Computer ladbar ist und Softwarekodeanteile einschließt, die ausgebildet sind, um das Verfahren nach einem der Ansprüche 1 bis 17 auszuführen.

## Revendications

**1.** Procédé de configuration d'un réseau de communication, comprenant les étapes consistant à :

- identifier (132) une configuration de réseau donnée ayant une topologie de réseau donnée sur la base d'arcs ayant des poids de routage administratif associés et comprenant un nombre de plus courts chemins donnés,
- générer (133.2) au moins une configuration voisine en produisant dans ladite topologie de réseau une perturbation en laissant lesdits poids de routage administratif inaffectés et dans lequel la majorité des plus courts chemins dans ladite configuration voisine se compose de plus courts chemins dudit nombre laissé inaffecté par ladite perturbation et de combinaisons de plus courts chemins dudit nombre,
- soumettre ladite au moins une configuration voisine à un test de faisabilité (133.4) en termes de résilience de ladite au moins une configuration voisine à une panne dans ladite topologie de réseau,
- évaluer (131, 133.5, 133.6) ladite configuration voisine par rapport à ladite configuration donnée sur la base d'une fonction de coût donnée, de telle manière que ladite évaluation implique uniquement la partie de ladite topologie de réseau affectée par ladite perturbation, et
- substituer (133.8, 133.10) ladite au moins une configuration voisine à ladite configuration donnée s'il s'avère que ladite au moins une configuration voisine représente une amélioration par rapport à ladite configuration donnée sur la base de ladite fonction de coût, **caractérisé en ce que** ledit test de faisabilité comprend les étapes consistant à :
- classifier le trafic transporté sur ledit réseau de communication dans une première classe, R, de trafic à réacheminer en cas de panne de réseau et une deuxième classe, U, de trafic apte à être perdu en cas de panne de réseau, et
- contrôler ladite configuration voisine en termes de résilience en tant que capacité de routage de ladite première classe de trafic, R, en cas de panne de réseau.

**2.** Procédé selon la revendication 1, **caractérisé en ce qu'**il comprend les étapes consistant ensuite à générer (133.2) une pluralité desdites configurations voisines (133.3), et évaluer (133.5, 133.6) chacune desdites configurations voisines de ladite pluralité par rapport à une configuration donnée respective sur la base de ladite fonction de coût donnée.

**3.** Procédé selon la revendication 1, **caractérisé en ce qu'**il comprend l'étape consistant à éliminer (183,4) comme solution voisine à évaluer par rapport à ladite configuration donnée toute solution voisine ne passant pas ledit contrôle de résilience.

**4.** Procédé selon la revendication 2, **caractérisé en ce qu'**il comprend l'étape consistant ensuite à évaluer lesdites configurations voisines de ladite pluralité par rapport aux configurations données respectives sur la base d'un mécanisme de recherche général (133).

**5.** Procédé selon la revendication 4, **caractérisé en ce que** ledit mécanisme de recherche est un mécanisme de recherche local dans lequel ladite configuration donnée est remplacée par une configuration voisine de coût inférieur ou par une première configuration voisine de coût minimum trouvée dans le cas d'une première amélioration.

**6.** Procédé selon la revendication 4, **caractérisé en ce que** ledit mécanisme de recherche est un mécanisme de recherche tabou dans lequel ladite configuration donnée est remplacée par une configuration voisine de coût minimum même si le coût de ladite configuration voisine est supérieur au coût de ladite configuration donnée.

**7.** Procédé selon la revendication 5 ou 6, **caractérisé en ce qu'**il comprend l'étape consistant à soumettre ladite topologie de réseau à une diversification (134) entre des recherches suivantes dans ledit mécanisme de recherche.

**8.** Procédé selon la revendication 1, **caractérisé en ce qu'**il comprend l'étape consistant identifier ladite configuration donnée ($U_{start}$ ; 132.2) sous la forme d'une configuration spécifiée par l'utilisateur.

**9.** Procédé selon la revendication 1, **caractérisé en ce qu'**il comprend l'étape consistant à identifier ladite configuration donnée ($U_{start}$ ; 132.2) sous la forme d'une configuration entièrement connectée comprenant une configuration spécifiée en topologie entièrement connectée.

**10.** Procédé selon la revendication 1, **caractérisé en ce qu'**il comprend l'étape consistant à identifier ladite configuration donnée ($U_{start}$ ; 132.2) en définissant une topologie de départ et en ajoutant sélectivement à ladite topologie de départ des arcs d'une configuration spécifiée par l'utilisateur.

**11.** Procédé selon l'une quelconque des revendications 8 à 10, **caractérisé en ce qu'**il comprend l'étape consistant à analyser (121) ladite configuration donnée en termes de faisabilité de topologie.

**12.** Procédé selon la revendication 10, **caractérisé en ce qu'**il comprend l'étape consistant à ajouter des arcs à ladite configuration de départ pour atteindre une configuration du plus petit coût admissible en termes de topologie.

**13.** Procédé selon la revendication 1, **caractérisé en ce qu'**il comprend l'étape consistant à évaluer ladite configuration voisine par rapport à ladite configuration donnée sur la base d'une stratégie de la plus forte descente ou de descente de première amélioration.

**14.** Procédé selon la revendication 1, **caractérisé en ce que** ladite étape consistant à générer (133.2) ladite au moins une solution voisine en produisant une perturbation dans ladite topologie de réseau qui comprend au moins l'une des étapes consistant à :

- ajouter un arc à ladite topologie de réseau donnée,
- enlever un arc de ladite topologie de réseau donnée, et
- échanger un couple d'arcs dans une dite topologie de réseau donnée.

**15.** Procédé selon la revendication 14, **caractérisé en ce que** ladite étape consistant à générer (133.2) ladite au moins une solution voisine en produisant une perturbation dans ladite topologie de réseau comprend au moins l'une des étapes consistant à :

- a) examiner au moins un ensemble de configurations obtenues en ajoutant ou en enlevant un arc de ladite topologie de réseau donnée,
- b) évaluer, en plus de toutes les configurations examinées à l'étape a), toutes les configurations obtenues en échangeant chaque arc impliqué dans ladite topologie de réseau donnée par un arc qui n'est pas inclus dans ladite topologie de réseau donnée,
- c) limiter l'évaluation de l'étape b) précédente aux configurations voisines obtenues par :

  i) l'ajout d'un arc conduisant à la meilleure configuration dans ledit ensemble sur la base de ladite fonction de coût donnée et l'enlèvement individuel sélectif de tous les arcs inclus dans ladite topologie donnée, et
  ii) l'enlèvement d'un arc conduisant à la meilleure configuration dans ledit ensemble sur la base de ladite fonction de coût donnée et l'enlèvement individuel sélectif de tous les arcs non inclus dans ladite topologie donnée, et

- d) limiter ladite étape d'échange d'un couple d'arcs aux couples d'arcs qui ont un de leurs noeuds de terminaison en commun.

**16.** Procédé selon la revendication 1, **caractérisé en ce qu'**il comprend l'étape consistant à effectuer un contrôle dans ladite au moins une configuration voisine pour déterminer si le flux de trafic dans ledit réseau est affecté par un défaut dans ladite topologie de réseau associée à des chemins de restauration.

**17.** Procédé selon la revendication 16, **caractérisé en ce que** ledit contrôle implique la détermination d'au moins l'une des conditions suivantes :

- l'acheminement principal de ladite configuration de réseau donnée reste valide pour ladite configuration voisine, moyennant quoi le trafic est affecté par les mêmes défauts d'éléments,
- ledit acheminement principal est partiellement valide pour ladite configuration voisine, **en ce qu'**un sous-ensemble de plus courts chemins équivalents dans ladite configuration voisine utilise des éléments en panne, moyennant quoi un flux de trafic est affecté par un sous-ensemble des défauts dans ladite configuration donnée,
- ledit acheminement principal change pour ladite configuration voisine par rapport à ladite configuration donnée, moyennant quoi l'ensemble d'éléments de noeuds à protéger contre une panne est différent pour ladite configuration voisine par rapport à ladite configuration donnée dans lequel un nouvel ensemble de chemins d'acheminement doit être calculé, et
- l'acheminement principal pour ladite configuration voisine est modifié et ne peut plus être affecté par un ensemble de pannes d'éléments susceptibles d'affecter ladite configuration donnée, moyennant quoi une capacité de restauration attribuée au flux de trafic protégé dans ladite configuration donnée est enlevée.

**18.** Système apte à configurer un réseau de communication, le système étant apte à :

- identifier (132) une configuration de réseau donnée ayant une topologie de réseau donnée sur la base d'arcs ayant des poids de routage administratif associés et comprenant un nombre de plus courts chemins donnés,
- générer (133.2) au moins une configuration voisine en produisant dans ladite topologie de réseau une perturbation en laissant lesdits poids d'acheminement administratif inaffectés et dans lequel la majorité des plus courts chemins dans ladite configuration voisine se compose de plus courts chemins dudit nombre laissé inaffecté par ladite perturbation et de combinaisons de plus courts chemins dudit nombre,
- soumettre ladite au moins une configuration voisine à un test de faisabilité (133.4) en termes de résistance de ladite au moins une configuration voisine à une panne dans ladite topologie de réseau ;
- évaluer (131, 133.5, 133.6) ladite configuration voisine par rapport à ladite configuration donnée sur la base d'une fonction de coût donnée, de telle manière que ladite évaluation implique uniquement la partie de ladite topologie de réseau affectée par ladite perturbation, et
- substituer (133.8, 133.10) ladite au moins une configuration voisine à ladite configuration donnée s'il s'avère que ladite configuration voisine représente une amélioration par rapport à ladite configuration donnée sur la base de ladite fonction de coût, **caractérisé en ce que** ledit test de faisabilité comprend les étapes consistant à :
- classifier le trafic transporté sur ledit réseau de communication dans une première classe, R, de trafic à réacheminer en cas de panne de réseau et une deuxième classe, U, de trafic apte à être perdu en cas de panne de réseau, et
- contrôler ladite au moins une configuration voisine en termes de résilience en tant que capacité de réacheminement de ladite première classe de trafic, R, en cas de panne de réseau.

**19.** Système selon la revendication 18, **caractérisé en ce que** le système est configuré pour ensuite générer (133.2) une pluralité desdites configurations voisines (133.3), et évaluer (133.5, 133.6) chacune desdites configurations voisines de ladite pluralité par rapport à une configuration donnée respective sur la base de ladite fonction de coût donnée.

**20.** Système selon la revendication 18, **caractérisé en ce que** le système est configuré pour éliminer (183.4) comme solution voisine à évaluer par rapport à ladite configuration donnée toute solution voisine ne passant pas ledit contrôle de résilience.

**21.** Système selon la revendication 19, **caractérisé en ce que** le système est configuré pour ensuite à évaluer lesdites configurations voisines de ladite pluralité par rapport aux configurations données respectives sur la base d'un mécanisme de recherche général (133).

**22.** Système selon la revendication 21, **caractérisé en ce que** ledit mécanisme de recherche est un mécanisme de recherche local dans lequel ladite configuration donnée est remplacée par une configuration voisine de coût inférieur ou par une première configuration voisine de coût minimum trouvée dans le cas d'une première amélioration.

**23.** Système selon la revendication 21, **caractérisé en ce que** ledit mécanisme de recherche est un mécanisme de recherche tabou dans lequel ladite configuration donnée est remplacée par une configuration voisine de coût minimum même si le coût de ladite configuration voisine est supérieur au coût de ladite configuration donnée.

**24.** Système selon la revendication 22 ou 23, **caractérisé en ce que** le système est configuré pour soumettre ladite topologie de réseau à une diversification (134) entre des recherches suivantes dans ledit mécanisme de recherche.

**25.** Système selon la revendication 18, **caractérisé en ce que** le système est configuré pour identifier ladite configuration donnée ($U_{start}$ ; 132.2) sous la forme d'une configuration spécifiée par l'utilisateur.

**26.** Système selon la revendication 18, **caractérisé en ce que** le système est configuré pour identifier ladite configuration donnée ($U_{start}$ ; 132.2) sous la forme d'une configuration entièrement connectée comprenant une configuration spécifiée en topologie entièrement connectée.

**27.** Système selon la revendication 18, **caractérisé en ce que** le système est configuré pour identifier ladite configuration donnée ($U_{start}$ ; 132.2) en définissant une topologie de départ et en ajoutant sélectivement à ladite topologie de départ des arcs d'une configuration spécifiée par l'utilisateur.

**28.** Système selon l'une quelconque des revendications 25 à 27, **caractérisé en ce que** le système est configuré pour analyser (121) ladite configuration donnée en termes de faisabilité de topologie.

**29.** Système selon la revendication 27, **caractérisé en ce que** le système est configuré pour ajouter des arcs à ladite configuration de départ pour atteindre une configuration du plus petit coût admissible en termes de topologie.

**30.** Système selon la revendication 18, **caractérisé en ce que** le système est configuré pour évaluer ladite configuration voisine par rapport à ladite configuration donnée sur la base d'une stratégie de la plus forte descente ou de descente de première amélioration.

**31.** Système selon la revendication 18, **caractérisé en ce que** le système est configuré pour générer (133.2) ladite au moins une solution voisine en produisant une perturbation dans ladite topologie de réseau, le système étant configuré pour effectuer au moins l'une des opérations consistant à :

- ajouter un arc à ladite topologie de réseau donnée,
- enlever un arc de ladite topologie de réseau donnée, et
- échanger un couple d'arcs dans une dite topologie de réseau donnée.

**32.** Système selon la revendication 31, **caractérisé en ce que** le système est configuré pour générer (133.2) ladite solution voisine en produisant une perturbation dans ladite topologie de réseau, le système étant configuré pour effectuer au moins l'une des opérations consistant à :

- a) examiner au moins un ensemble de configurations obtenues en ajoutant ou en enlevant un arc de ladite topologie de réseau donnée,
- b) évaluer, en plus de toutes les configurations examinées à l'opération a), toutes les configurations obtenues en échangeant chaque arc impliqué dans ladite topologie de réseau donnée par un arc qui n'est pas inclus dans ladite topologie de réseau donnée,
- c) limiter l'évaluation de l'opération b) précédente aux configurations voisines obtenues par :

  i) l'ajout d'un arc conduisant à la meilleure configuration dans ledit ensemble sur la base de ladite fonction de coût donnée et l'enlèvement individuel sélectif de tous les arcs inclus dans ladite topologie donnée, et
  ii) l'enlèvement d'un arc conduisant à la meilleure configuration dans ledit ensemble sur la base de ladite fonction de coût donnée et l'enlèvement individuel sélectif de tous les arcs non inclus dans ladite topologie donnée, et

- d) limiter ladite opération d'échange d'un couple d'arcs aux couples d'arcs qui ont un de leurs noeuds de terminaison en commun.

**33.** Système selon la revendication 18, **caractérisé en ce que** le système est configuré pour effectuer un contrôle dans ladite configuration voisine pour déterminer si le flux de trafic dans ledit réseau est affecté par un défaut dans ladite topologie de réseau associée à des chemins de restauration.

**34.** Système selon la revendication 33, **caractérisé en ce que** le système est configuré pour effectuer ledit contrôle en déterminant au moins l'une des conditions suivantes :

- l'acheminement principal de ladite configuration de réseau donnée reste valide pour ladite configuration voisine, moyennant quoi le trafic est affecté par les mêmes défauts d'éléments,

- ledit acheminement principal est partiellement valide pour ladite configuration voisine, **en ce qu'**un sous-ensemble de plus courts chemins équivalents dans ladite configuration voisine utilise des éléments en panne, moyennant quoi un flux de trafic est affecté par un sous-ensemble des défauts dans ladite configuration donnée,

- ledit acheminement principal change pour ladite configuration voisine par rapport à ladite configuration donnée, moyennant quoi l'ensemble d'éléments de noeuds à protéger contre une panne est différent pour ladite configuration voisine par rapport à ladite configuration donnée dans lequel un nouvel ensemble de chemins d'acheminement doit être calculé, et

- l'acheminement principal pour ladite configuration voisine est modifié et ne peut plus être affecté par un ensemble de pannes d'éléments susceptibles d'affecter ladite configuration donnée, moyennant quoi une capacité de restauration attribuée au flux de trafic protégé dans ladite configuration donnée est enlevée.

**35.** Réseau de communication comprenant un système selon l'une quelconque des revendications 18 à 34.

**36.** Produit de programme informatique chargeable dans la mémoire d'au moins un ordinateur et comprenant des parties de code logiciel pour effectuer le procédé selon l'une quelconque des revendications 1 à 17.

EP 1 762 053 B1

Fig_1

EP 1 762 053 B1

# Fig. 2

equivalent shortest paths from S to D

p1, weight=50, 4 hops

p2, weight=50, 5 hops

S

D

p3, weight=50, 2 hops

p4, weight=50, 3 hops

EP 1 762 053 B1

# Fig.3

flow of 300 units from S to D

100

L1

S

100

L2

100

L3

D

traffic splitted in three equal parts
on outgoing links L1, L2 and L3

Fig.4

Fig.5

Fig. 6

Fig. 7

# Fig.8

# Fig.10

# Fig. 9

Fig-11

Fig _ 12

EP 1 762 053 B1

# Fig.13

400

402

NO YES

404

408

YES

406

NO

410

EP 1 762 053 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1005193 A
- EP 1005194 A
- US 6240463 B
- EP 1005195 A

### Non-patent literature cited in the description

- **Bley, M. Grötschel ; R. Wessäly.** Design of Broadband Virtual Private Networks: Model and Heuristics for the B-WiN. *Technical Report SC 98-13, Konrad-Zuse-Zentrum für Informationstechnik,* 1998
- **Chamberland S. ; B. Sansò.** Overall Design of Reliable IP Networks with Performance Guarantees. *Le Cahiers du GERAD G-2000-30,* 2000
- **A. Nucci ; B. Sanso ; T.G. Cranic ; E. Leonardi ; M. Ajmone Marsan.** Design of Fault Tolerant Locigal Topologies in Wavelength Routed Optical IP Networks. *IEEE Globecomm 2001,* 25 November 2001, 1-5
- **B. Fortz ; M. Thorup.** Internet Traffic Engineering by optimizing OSPF weights. *Proceedings of IEEE INFOCOM '00,* 2000